# EUROPEAN PATENT APPLICATION

(11) **EP 1 484 370 A1**
(43) Date of publication of application: **08.12.2004**
(21) Application number: 04252989.1
(22) Date of filing: 21.05.2004
(51) Int. Cl.: C09D 11/10

(54) **Photocurable ink, and image recording apparatus and image recording method employing the photocurable ink**

(30) Priority: 02.06.2003 JP 2003156574
(71) Applicant: Konica Minolta Medical & Graphic Inc., Tokyo 163-0512 (JP)
(72) Inventor: Hirai, Yoko, C/o Konica Minolta Medical & Graphic, Tokyo 191-8511 (JP)
(74) Representative: Eddowes, Simon

(57) **Abstract**

Disclosed is an image recording method employing a photocurable ink containing an oxetane compound with an oxetane ring having a substituent at the 2-position, the method comprising the steps of (a) ejecting the photocurable ink as ink droplets from an ink ejecting section of a recording head onto a recording medium, and (b) exposing, to ultraviolet light, the photocurable ink ejected onto the recording medium, wherein the ink ejecting section is heated to a temperature of 40 to 80 °C and the recording medium is heated to a temperature equal to or lower than that of the ink ejecting section, so that the difference in temperature between the ink ejecting section and the recording medium is not more than 40 °C.

## Description

### FIELD OF THE INVENTION

The present invention relates to a photocurable ink of a cationic polymerization type, particularly a photocurable ink capable of minimizing lowering of sensitivity under high humidity condition, and to an image recording apparatus and an image recording method employing the photocurable ink.

### BACKGROUND OF THE INVENTION

In recent years, an ink jet recording method has found wide application in various kinds of graphic art fields such as photography, various kinds of printing, marking and specific printing such as a color filter, since it can form images easily and inexpensively as compared with a gravure printing method. Particularly, it has also become possible to obtain image quality comparable to silver salt photograph images by utilizing an ink jet printer, employing an ink jet recording method, which ejects and controls fine dots; ink in which a color reproduction range, durability and ejection suitability have been improved; and exclusive paper in which ink absorption, color forming property of colorants and surface gloss have been greatly improved.

The ink jet recording method is divided by kinds of ink used. That is, there are a phase-conversion ink jet method utilizing wax ink which is solid at room temperature, a solvent-type ink jet method utilizing an ink which is mainly comprised of a rapid-drying organic solvent, and a photocurable type ink jet method in which an ink is cured by ultraviolet light irradiation after recording.

The photocurable type ink jet method has been noted in respect to odor relatively lower than that of another method, rapid drying property, and capability of recording on a recording medium having no ink absorption in addition to exclusive recording medium.

The ink used in the photocurable type ink jet method, i.e., a photocurable ink is divided into two types, according to difference in ink composition or in polymerization mechanism, i.e., a photocurable ink of a radical polymerization type, and a photocurable ink of a cationic polymerization type. The photocurable ink of a radical polymerization type has problems in that since the curing reaction is inhibited by oxygen on account of its polymerization mechanism, the use conditions are greatly limited. In contrast, the photocurable ink of a cationic polymerization type has advantage in that since it is not influenced by oxygen unlike the photocurable ink of a radical polymerization type, the use conditions are not limited by presence of oxygen. The composition and characteristics of such a photocurable ink of a cationic polymerization type are described in detail in Japanese Patent O.P.I. Publication Nos. 2003-55462 and 2002-137375.

In the ink jet printer employing a photocurable ink, the recording head ejecting the ink and the ultraviolet light source adjacent to each other are installed in the carriage, and on image recording, the ink jet printer moves the carriage while ejecting the ink from the ink recording head onto a recording medium and irradiating ultraviolet light to the ejected ink on the recording medium, whereby an image is recorded on the recording medium (see for example, Japanese Patent O.P.I. Publication No. 2002-137375).

The photocurable ink of a cationic polymerization type, which includes those described in the above Patent Publications, is not influenced by oxygen, as described above, however, since sensitivity of the ink lowers under high humidity condition, it is difficult to cure the ink by irradiation of ultraviolet light with a normal intensity. Therefore, when an image is recorded under high humidity condition, the ink may be cured by irradiation of ultraviolet light with an excessive intensity higher than a normal one, but such ultraviolet light with an excessive intensity is strongly reflected from a recording medium, and an ink ejecting section of the recording head is exposed to the reflected light, resulting in clogging due to ink of the recording head. When ultraviolet light with a lower intensity is employed in order to prevent such clogging, the ink is not sufficiently cured on account of ink sensitivity lowering as described above, resulting in blocking. Herein, "blocking" means the phenomenon that printed (recorded) mediums superposed adhere to each other. The blocking lowers storage stability of a recording medium with a recorded image and image quality of the recorded image.

### SUMMARY OF THE INVENTION

An object of the invention is to provide a photocurable ink capable of preventing ink sensitivity lowering under high humidity condition, and an image recording apparatus and an image recording method each employing the photocurable ink.

### BRIEF EXPLANATION OF THE DRAWING

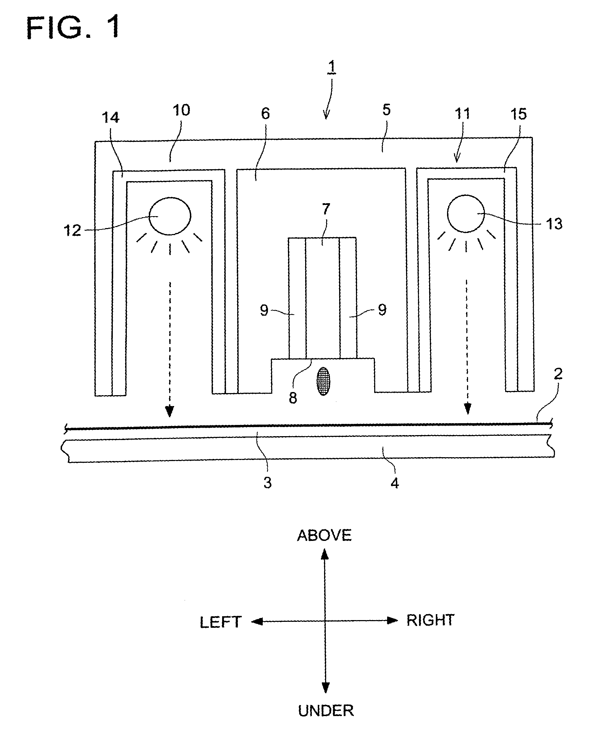

Fig. 1 shows a sectional view of ink-jet printer 1, viewed from the front.

### DETAILED DESCRIPTION OF THE INVENTION

The above object has been achieved by any one of items described below.
1. An image recording method employing a photocurable ink containing an oxetane compound with an oxetane ring having a substituent at the 2-position, the method comprising the steps of (a) ejecting the photocurable ink as ink droplets from an ink ejecting section of a recording head onto a recording medium, and (b) exposing, to ultraviolet light, the photocurable ink ejected onto the recording medium, wherein the ink ejecting section is heated to a temperature of 40 to 80 °C and the recording medium is heated to a temperature equal to or lower than that of the ink ejecting section, so that the difference in temperature between the ink ejecting section and the recording medium is not more than 40°C.
2. The image recording method of item 1 above, wherein the ultraviolet light comprises a first emission spectrum of from 220 to 280 nm, and a second emission spectrum of from more than 280 to 400 nm, and wherein intensity of the first emission spectrum is not less than one third of that of the second emission spectrum.
3. The image recording method of item 1 above, wherein the photocurable ink ejected onto the recording medium is exposed to the ultraviolet light for 0.05 to 10 seconds.
4. The image recording method of item 1 above, wherein each of the ink droplets of the photocurable ink to be ejected from the ink ejecting section of the recording head onto the recording medium has a volume of 1 to 10 pl.
5. An image recording apparatus employing a photocurable ink containing an oxetane compound with an oxetane ring having a substituent at the 2-position, the image recording apparatus comprising a recording head having an ink ejecting section for ejecting a photocurable ink as ink droplets onto a recording medium, a recording head heater for heating the ink ejecting section of the recording head, a recording medium heater for heating the recording medium, and an ultraviolet light source for emitting ultraviolet light to which the ink to have been ejected onto the recording medium is exposed, wherein while the recording head is operated to eject the ink onto the recording medium to record an image on the recording medium, the ink ejecting section is heated by the recording head heater to a temperature of 40 to 80 °C and the recording medium is heated by the recording medium heater to a temperature equal to or lower than that of the ink ejecting section, so that the difference in temperature between the ink ejecting section and the recording medium is not more than 40 °C.
6. The image recording apparatus of item 5 above, wherein the ultraviolet light comprises a first emission spectrum of from 220 to 280 nm and a second emission spectrum of from more than 280 to 400 nm, and wherein intensity of the first emission spectrum is not less than one third of that of the second emission spectrum.
7. The image recording apparatus of item 5 above, wherein the photocurable ink ejected onto the recording medium is exposed to the ultraviolet light for 0.05 to 10 seconds.
8. The image recording apparatus of item 5 above, wherein each of the ink droplets of the photocurable ink to be ejected from the ink ejecting section of the recording head onto the recording medium has a volume of 1 to 10 pl.
9. A photocurable ink of a cationic polymerization type, wherein the ink contains an oxetane compound with an oxetane ring having a substituent at the 2-position, a photoinitiator and a colorant.
10. The photocurable ink of item 9 above, wherein the oxetane compound is a bifunctional oxetane compound.

1-1. A photocurable ink of a cationic polymerization type, wherein the ink contains an oxetane compound with an oxetane ring having a substituent at the 2-position.
1-2. The photocurable ink of item 1-1 above, wherein the oxetane compound is a bifunctional oxetane compound.
1-3. An image recording apparatus employing the photocurable ink of item 1-1 or 1-2, the image recording apparatus comprising a recording head having an ink ejecting section for ejecting a photocurable ink onto a recording medium, a recording head heater for heating the ink ejecting section of the recording head, a recording medium heater for heating the recording medium, and an ultraviolet light source for emitting ultraviolet light to which the ink ejected onto the recording medium is exposed, wherein when the recording head is operated to eject the ink onto the recording medium to record an image on the recording medium, the ink ejecting section is heated by the recording head heater to a temperature of 40 to 80 °C and the recording medium is heated by the recording medium heater to a temperature equal to or lower than that of the ink ejecting section, so that the difference in temperature between the ink ejecting section and the recording medium is not more than 40 °C.
1-4. The image recording apparatus of item 1-3 above, wherein the ultraviolet light comprises a first emission spectrum of from 220 to 280 nm and a second emission spectrum of from 280 to 400 nm, and wherein intensity of the first emission spectrum is not less than one third of that of the second emission spectrum.
1-5. The image recording apparatus of item 1-3 or 1-4 above, wherein the photocurable ink ejected onto the recording medium is exposed to the ultraviolet light for 0.05 to 10 seconds.
1-6. The image recording apparatus of any one of items 1-3 through 1-5 above, wherein each of ink droplets of the photocurable ink to be ejected from the recording head onto the recording medium has a volume of 1 to 10 pl.
1-7. An image recording method employing the photocurable ink of item 1-1 or 1-2 above, the method comprising the steps of (a) ejecting the photocurable ink as ink droplets from an ink ejecting section of a recording head onto a recording medium, and (b) exposing, to ultraviolet light, the photocurable ink ejected onto the recording medium, wherein the ink ejecting section is heated to a temperature of 40 to 80 °C and the recording medium is heated to a temperature equal to or lower than that of the ink ejecting section, so that the difference in temperature between the ink ejecting section and the recording medium is not more than 40 °C.
1-8. The image recording method of item 1-7 above, wherein the ultraviolet light comprises a first emission spectrum of from 220 to 280 nm, and a second emission spectrum of from 280 to 400 nm, and wherein intensity of the first emission spectrum is not less than one third of that of the second emission spectrum.
1-9. The image recording method of item 1-7 or 1-8 above, wherein the photocurable ink ejected onto the recording medium is exposed to the ultraviolet light for 0.05 to 10 seconds.
1-10. The image recording method of any one of items 1-7 through 1-9 above, wherein each of the ink droplets of the photocurable ink to be ejected from the recording head onto the recording medium has a volume of 1 to 10 pl.

The image recording method as described in item 1 above can record an image on a recording medium under reduced humidity condition, and prevent ink sensitivity lowering with certainty.

In the image recording method as described in item 2 above, the photocurable ink ejected onto the recording medium is exposed to ultraviolet light comprising more of higher energy ultraviolet light with a shorter wavelength, which can shorten ultraviolet light irradiation time, and can prevent, with certainty, clogging due to ink of the recording head.

The image recording method as described in item 3 above can cure ink ejected onto the recording medium with certainty, and can prevent, with certainty, lowering of storage stability of a recording medium with a recorded image and image quality of the recorded image.

The image recording method as described in item 4 above can record an image with extremely small dots on a recording medium.

The image recording apparatus described in item 5 above can record an image on a recording medium under reduced humidity condition, and prevent ink sensitivity lowering.

The image recording apparatus described in item 6 above comprises the ultraviolet light source capable of emitting a high energy ultraviolet light rich in a short wavelength light, which can shorten ultraviolet light irradiation time, and can prevent clogging due to ink of a recording head with certainty.

The image recording apparatus described in item 7 above can cure ink ejected onto the recording medium with certainty, and can prevent, with certainty, lowering of storage stability of a recording medium with a recorded image or image quality of the recorded image.

The image recording apparatus described in item 8 above can record an image with extremely small dots on a recording medium.

The photocurable ink as described in item 9 or 10 above can prevent ink sensitivity lowering under high humidity condition. That is, the photocurable ink of item 9 or 10 above can be sufficiently cured by irradiation of an approximately normal intensity of ultraviolet light under high humidity condition, since the sensitivity does not lower. Therefore, when this ink is used as ink for image recording, clogging due ink of an ink recording head is avoided, since an excessive intensity of ultraviolet light is not required. Further, there does not occur the phenomenon that storage stability of a recording medium with a recorded image, or image quality of the recorded image lowers on account of insufficient ultraviolet light exposure.

Next, the present invention will be explained, employing figures, but is not limited thereto.

Fig. 1 shows a sectional view of ink-jet printer 1, viewed from the front.

In Fig. 1, the ink-jet printer 1, as an image recording apparatus, comprises platen 3 for supporting a recording medium 2. Heater 4 for heating the platen 3 is provided under the platen 3, in which the platen 3 is heated by means of the heater 4 and heat of the platen 3 is transferred to the recording medium 2. That is, the heater 4 heats the recording medium 2. The ink-jet printer 1 comprises a transporting system (not illustrated) which transports the recording medium 2 in the intended direction, and the recording medium 2 on the platen 3 is transported from the rear of the page to the front of the page.

Carriage 5, which is capable of laterally reciprocating is provided above the platen 3. The carriage 5 can move in the direction perpendicular to the transportation direction of the recording medium 2, and recording head 6, which ejects ink onto the recording medium 2, is installed in the central portion of the carriage 5. The recording head 6 has ink ejecting section 8 in which numerous nozzles 7, from which ink is ejected as ink droplets, are arranged, and ink droplets are ejected from the ink ejecting section 8 onto the recording medium 2. In the invention, it is preferred that the ink droplets having a volume of 1 to 10 pl are ejected on the recording medium.

The ink ejecting section 8 is preferably composed of a plate in which orifices of the nozzles 7, from which ink is ejected toward the recording medium, are arranged.

In the recording head 6, heater 9 for heating ink in the nozzles 7 is provided along the nozzles 7. In the invention, the recording head 6 is constructed so that the ink ejecting section 8 is heated to a temperature of from 40 to 80 °C by heater 9. That is, the heater 9 is a recording head heater capable of heating the ink ejecting section 8 of the recording head 6. As described above, in the invention the recording medium 2 is heated by the heater 4 through the platen 3, and the recording medium 2 is heated so that the temperature of the recording medium 2 is equal to or lower than that of the ink ejecting section 8, and the difference in temperature between the recording medium 2 and the ink ejecting section 8 of the recording head 6 is not more than 40 °C.

Ultraviolet irradiation systems 10 and 11, which radiate ultraviolet light toward the recording medium 2, are provided on the right and left of the carriage 5. Ultraviolet light source 12 capable of emitting ultraviolet light is provided in the ultraviolet irradiation system 10, and ultraviolet light source 13 capable of emitting ultraviolet light is provided in the ultraviolet irradiation system 11. Examples of the ultraviolet light source used in the invention include a low pressure mercury lamp, a high pressure mercury lamp, a super high pressure mercury lamp, a metal halide lamp, a chemical lamp, a black-light lamp, a mercury-xenon lamp, an excimer lamp, a short-arc lamp, a helium-cadmium laser, an argon laser, an excimer laser, and LED (Light Emitting Diode). It is preferred in the invention that the ultraviolet light sources 12 and 13 are constructed so that the intensity of emission spectrum of 220 to 280 nm is not less than one third that of emission spectrum of more than 280 to 400 nm.

Further, reflection member 14, which is capable of reflecting ultraviolet light emitted from ultraviolet light source 12, is provided in the ultraviolet irradiation system 10, and reflection member 15, which is capable of reflecting ultraviolet light emitted from ultraviolet light source 13, is provided in the ultraviolet irradiation system 11. The reflection members 14 and 15 are in the form of a box with an opened bottom, and arranged to cover the ultraviolet light sources 12 and 13. In the ultraviolet irradiation systems 10 and 11, when ultraviolet light sources 12 and 13 are switched on, ultraviolet light is emitted in all directions from the light sources, the emitted ultraviolet light is reflected from the reflection members 14 and 15 and irradiates the recording medium 2. Employing the ultraviolet irradiation systems 10 and 11 having such a structure as described above, the recording medium 2 is exposed to ultraviolet light.

Next, ink used in the invention will be explained.

Ink used in the invention has a property cured on ultraviolet light exposure, and is a photocurable ink which contains an oxetane compound (G) (hereinafter also referred to as the oxetane compound in the invention) with an oxetane ring having a substituent at the 2-position, a photoinitiator (B), and a colorant (C).

The oxetane compound (G) with an oxetane ring having a substituent at the 2-position will be explained below. This oxetane compound may be a bifunctional oxetane compound (G-1) with two oxetane rings having a substituent at the 2-position or a monofunctional oxetane compound (G-2) with one oxetane ring having a substituent at the 2-position. The bifunctional oxetane compound (G-1) and the monofunctional oxetane compound (G-2) will be detailed below.

### [Bifunctional oxetane compound (G-1)]

Examples of the bifunctional oxetane compound include compounds represented by formulae (60) through (64).

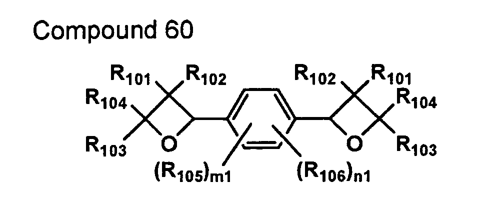

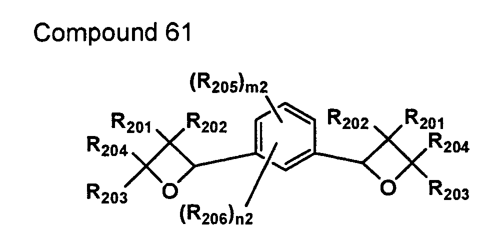

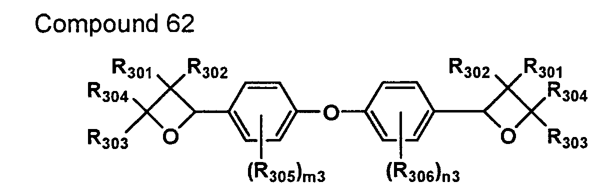

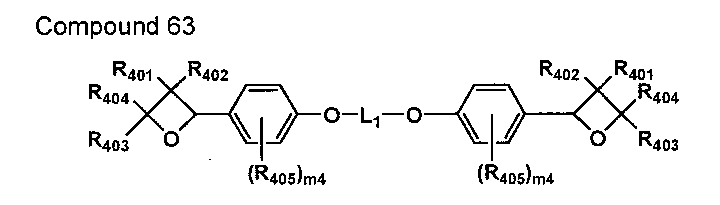

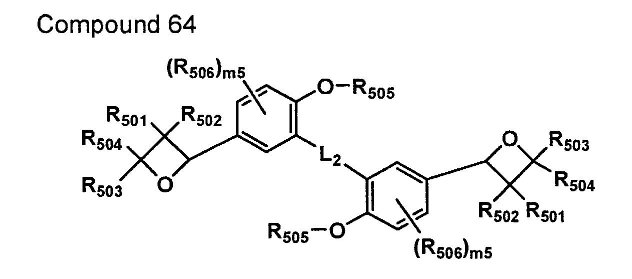

In formula (60), R₁₀₁ through R₁₀₄ independently represent a hydrogen atom or substituent, provided that R₁₀₁ through R₁₀₄ are not simultaneously hydrogens, in formula (61), R₂₀₁ through R₂₀₄ independently represent a hydrogen atom or substituent, provided that R₂₀₁ through R₂₀₄ are not simultaneously hydrogens, in formula (62), R₃₀₁ through R₃₀₄ independently represent a hydrogen atom or substituent, provided that R₃₀₁ through R₃₀₄ are not simultaneously hydrogens, in formula (63), R₄₀₁ through R₄₀₄ independently represent a hydrogen atom or substituent, provided that R₄₀₁ through R₄₀₄ are not simultaneously hydrogens, and in formula (64), R₅₀₁ through R₅₀₄ independently represent a hydrogen atom or substituent, provided that R₄₀₁ through R₄₀₄ are not simultaneously hydrogens. Examples of the substituent represented by R₁₀₁ through R₁₀₄ of formula (60), R₂₀₁ through R₂₀₄ of formula (61), R₃₀₁ through R₃₀₄ of formula (62), R₄₀₁ through R₄₀₄ of formula (63), and R₅₀₁ through R₅₀₄ of formula (64) include a halogen atom (for example, a chlorine atom, a bromine atom, or a fluorine atom); an alkyl group having a carbon atom number of from 1 to 6 (for example, a methyl group, an ethyl group, a propyl group, an isopropyl group, or a butyl group); a cycloalkyl group having a carbon number of from 3 to 6 (for example, a cyclopropyl group, a cyclobutyl group, a cyclopentyl group, or a cyclohexyl group); an alkenyl group having a carbon atom number of from 2 to 6 (for example, a vinyl group, a 1-propenyl group, a 2-propenyl group, or a 2-butenyl group); an alkinyl group having a carbon atom number of from 2 to 6 (for example, an acetylenyl group, a 1-propinyl group, a 2-propinyl group, or a 2-butinyl group); an alkoxy group having a carbon atom number of from 1 to 6 (for example, a methoxy group, an ethoxy group, an n-propoxy group, an isopropoxy group, a n-butoxy group or a tert-butoxy group); an acyl group (for example, an acetyl group, a propionyl group, or a trifluoroacetyl group); an acyloxy group (for example, an acetoxy group, a propionyloxy group, or a trifluoroacetoxy group); an alkoxycarbonyl group (for example, a methoxycarbonyl group, an ethoxycarbonyl group or a butoxycarbonyl group); and an aryloxycarbonyl group.

In formulae (60) through (64), two substituents bonding to the same carbon atom such as R₁₀₁ and R₁₀₂, R₁₀₃ and R₁₀₄, R₂₀₁ and R₂₀₂, R₂₀₃ and R₂₀₄, R₃₀₁ and R₃₀₂, R₃₀₃ and R₃₀₄, R₄₀₁ and R₄₀₂, R₄₀₃ and R₄₀₄, R₅₀₁ and R₅₀₂, and R₅₀₃ and R₅₀₄ may combine with each other to form a ring. These substituents have further a substituent. Examples of the substituent include a halogen atom (for example, a chlorine atom, a bromine atom, or a fluorine atom); an alkoxy group having a carbon atom number of from 1 to 6 (for example, a methoxy group, an ethoxy group, an n-propoxy group, an isopropoxy group, an n-butoxy group or a tert-butoxy group); an acyl group (for example, an acetyl group, a propionyl group, or a trifluoroacetyl group); an acyloxy group (for example, an acetoxy group, a propionyloxy group, or a trifluoroacetoxy group); an alkoxycarbonyl group (for example, a methoxycarbonyl group, an ethoxycarbonyl group or a tert-butoxycarbonyl group); an aryloxycarbonyl group; an alkylsulfonyl group; an arylsulfonyl group; a cyano group; and a nitro group. The preferred substituent is a halogen atom, an alkoxy group, an acyloxy group or an alkoxycarbonyl group.

The bifunctional oxetane compound used in the invention is preferably an oxetane compound with an oxetane ring having one or more substituents at the 3-position. Preferred examples of the substituent include an alkyl group having a carbon atom number of from 1 to 6 (for example, a methyl group, an ethyl group, a propyl group, an isopropyl group, or a butyl group); a cycloalkyl group having a carbon number of from 3 to 6 (for example, a cyclopropyl group, a cyclobutyl group, a cyclopentyl group, or a cyclohexyl group); an alkoxy group having a carbon atom number of from 1 to 6 (for example, a methoxy group, an ethoxy group, an n-propoxy group, an isopropoxy group, a n-butoxy group or a tert-butoxy group); an acyl group (for example, an acetyl group, a propionyl group, or a trifluoroacetyl group); an acyloxy group (for example, an acetoxy group, a propionyloxy group, or a trifluoroacetoxy group); and an alkoxycarbonyl group (for example, a methoxycarbonyl group, an ethoxycarbonyl group or a butoxycarbonyl group). These substituents have further a substituent. Preferred examples of the substituent are a halogen atom, an alkoxy group, an acyloxy group and an alkoxycarbonyl group.

The bifunctional oxetane compound used in the invention is preferably an oxetane compound with the oxetane ring having a substituted or unsubstituted alkyl group at the 3-position, and more preferably an oxetane compound with the oxetane ring having two alkyl groups at the 3-position, in which the carbon atom at the 3-position forms a tertiary carbon atom. Preferred examples of the substituent of the substituted alkyl group are a halogen atom, an alkoxy group, an acyloxy group and an alkoxycarbonyl group.

In the invention, the bifunctional oxetane compound with an oxetane ring having an electron withdrawing group at the 4-position makes it possible to more increase its reactivity. The electron withdrawing group is a substituent having a positive Hammett's substituent constant σp.
Examples of the electron withdrawing group include -NO₂, -CN, -SO₂-Alkyl, -CO-Alkyl, -CO-Aryl, -COO-Alkyl, -COO-Aryl, and a halogen atom (for example, a fluorine atom, a chlorine atom or a bromine atom). Preferred examples of the electron withdrawing group as the substituent at the 4-position are an alkyl group having, at the α, β and γ carbon atom, the above electron withdrawing group, particularly a fluorine atom.

The compounds represented by formulae (60)-(64) above will be explained below.

In formula (60), R₁₀₅ represents a substituted or unsubstituted alkoxy group, or a substituted or unsubstituted aryloxy group; and m1 represents 0, 1 or 2. The alkoxy group is preferably an alkoxy group having a carbon atom number of from 1 to 6 (for example, a methoxy group, an ethoxy group, an n-propyl group, an iso-propoxy group, or an n-butoxy group). m1 is preferably not less than 1, and more preferably 2. When m1 is 2 or more, plural R₁₀₅'s are the same or different.

The substitution position of R₁₀₅ is preferably at the ortho position to the oxetane ring. When m1 is 2, two alkoxy groups are preferably positioned at the ortho or para position on the benzene ring. When m1 is 2, and two alkoxy groups are positioned at the ortho position on the benzene ring, the two alkoxy groups may combine with each other to form a ring. When m1 is 2 and one R₁₀₅ is an aryloxy group, a divalent arylenedioxy group such as o-phenylenedioxy may be formed on the benzene ring to form a ring.

R₁₀₆ represents a substituent; and n1 represents 0, 1, 2 or 3. Examples of the substituent represented by R₁₀₆ include a halogen atom (for example, a chlorine atom, a bromine atom, or a fluorine atom); and a substituted or unsubstituted alkyl group having a carbon atom number of from 1 to 6 (for example, a methyl group, an ethyl group, a propyl group, an isopropyl group, a butyl group). Examples of the substituent of the alkyl group include a halogen atom (for example, a chlorine atom, a bromine atom, or a fluorine atom); an alkoxy group having a carbon atom number of from 1 to 6 (for example, a methoxy group, an ethoxy group, an n-propoxy group, an isopropoxy group, an n-butoxy group or a tert-butoxy group); an acyl group (for example, an acetyl group, a propionyl group, or a trifluoroacetyl group); an acyloxy group (for example, an acetoxy group, a propionyloxy group, or a trifluoroacetoxy group); and an alkoxycarbonyl group (for example, a methoxycarbonyl group, an ethoxycarbonyl group or a tert-butoxycarbonyl group). The preferred substituent is a halogen atom, an alkoxy group, an acyloxy group or an alkoxycarbonyl group. When n1 is 2 or more, plural R₁₀₆' s are the same or different. When R₁₀₅ and R₁₀₆ are adjacent to each other, R₁₀₅ and R₁₀₆ may combine with each other to form a ring.

In formula (61), R₂₀₅ represents a substituted or unsubstituted alkoxy group, or a substituted or unsubstituted aryloxy group; and m2 represents 0, 1, 2 or 3. The alkoxy group is preferably an alkoxy group having a carbon atom number of from 1 to 6 (for example, a methoxy group, an ethoxy group, an n-propyl group, an iso-propoxy group, or an n-butoxy group). m2 is preferably not less than 1, and more preferably 2. When m2 is 2 or more, plural R₂₀₅' s are the same or different.

The substitution position of R₂₀₅ is preferably at the ortho position to the oxetane ring. When the two oxetane rings are at the 1-, and 3-positions on the benzene ring and m2 is 1, R₂₀₅ is preferably at the 4-position, and when the two oxetane rings are at the 1-, and 3-positions on the benzene ring and m2 is 2, the two R₂₀₅' s are preferably at the 4-, and 6-positions. When m2 is 2 and the two alkoxy groups are adjacent to each other, they may combine with each other to form a ring. When m2 is 2 and one R₂₀₅ is an aryloxy group, a divalent arylenedioxy group such as o-phenylenedioxy may be formed on the benzene ring to form a ring.

R₂₀₆ represents a substituent; and n2 represents 0, 1, 2 or 3. Examples of the substituent represented by R₂₀₆ include a halogen atom (for example, a chlorine atom, a bromine atom, or a fluorine atom); and a substituted or unsubstituted alkyl group having a carbon atom number of from 1 to 6 (for example, a methyl group, an ethyl group, a propyl group, an isopropyl group, a butyl group). Examples of the substituent of the alkyl group include a halogen atom (for example, a chlorine atom, a bromine atom, or a fluorine atom); an alkoxy group having a carbon atom number of from 1 to 6 (for example, a methoxy group, an ethoxy group, an n-propoxy group, an isopropoxy group, an n-butoxy group or a tert-butoxy group); an acyl group (for example, an acetyl group, a propionyl group, or a trifluoroacetyl group); an acyloxy group (for example, an acetoxy group, a propionyloxy group, or a trifluoroacetoxy group); and an alkoxycarbonyl group (for example, a methoxycarbonyl group, an ethoxycarbonyl group or a tert-butoxycarbonyl group). The preferred substituent is a halogen atom, an alkoxy group, an acyloxy group or an alkoxycarbonyl group. When n2 is 2 or more, plural R₂₀₆'s are the same or different. When R₂₀₅ and R₂₀₆ are adjacent to each other, R₁₀₅ and R₁₀₆ may combine with each other to form a ring.

In formula (62), R₃₀₅ and R₃₀₆ independently represent a substituent; and m3 and n3 independently represent 0, 1, 2, 3 or 4. Examples of the substituent represented by R₃₀₅ and R₃₀₆ include a halogen atom (for example, a chlorine atom, a bromine atom, or a fluorine atom); an alkyl group having a carbon atom number of from 1 to 6 (for example, a methyl group, an ethyl group, a propyl group, an isopropyl group, or a butyl group); an alkoxy group having a carbon atom number of from 1 to 6 (for example, a methoxy group, an ethoxy group, an n-propoxy group, an isopropoxy group, an n-butoxy group or a tert-butoxy group); an acyl group (for example, an acetyl group, a propionyl group, a trifluoroacetyl group, or a benzoyl group); an acyloxy group (for example, an acetoxy group, a propionyloxy group, or a trifluoroacetoxy group); and an alkoxycarbonyl group (for example, a methoxycarbonyl group, an ethoxycarbonyl group or a tert-butoxycarbonyl group). When m3 and n3 each are 2 or more, plural R₃₀₅'s and R₃₀₆'s each are the same or different. When both R₃₀₅ and R₃₀₆ are at the ortho position to the oxygen atom through which combines the two benzene rings, they may combine with each other to form a ring. Example of the divalent group for forming the ring include -O-, -S-, >C=O, >C=S, -CH₂-, -CHR-, -C(R)₂-, in which R represents a substituent. Examples of the substituent represented by R are the same as those denoted in R₁₀₁ through R₁₀₄ above.

In formula (63), R₄₀₅ represents a substituent, and m4 is an integer of from 0 to 4. Examples of the substituent represented by R₄₀₅ include a halogen atom (for example, a chlorine atom, a bromine atom, or a fluorine atom), an alkyl group having a carbon atom number of from 1 to 6 (for example, a methyl group, an ethyl group, a propyl group, an isopropyl group, or a butyl group), an alkoxy group having a carbon atom number of from 1 to 6 (for example, a methoxy group, an ethoxy group, an n-propoxy group, an isopropoxy group, an n-butoxy group or a tert-butoxy group), an acyl group (for example, an acetyl group, a propionyl group, or a trifluoroacetyl group), and an acyloxy group (for example, an acetoxy group, a propionyloxy group, or a trifluoroacetoxy group).

When m4 is 2 or more, plural R₄₀₅'s may be the same or different.

L₁ represents a divalent linkage group having a carbon number of from 1 to 15, provided that the divalent linkage group may contain an oxygen atom or a sulfur atom in the main chain. Examples of the divalent linkage group include the followings:
a methylene group [-CH₂-],
an ethylidene group [>CHCH₃],
an isopropylidene group [>C(CH₃)₂],
a 1,2-ethylene group [-CH₂CH₂-],
a 1,2-propylene group [-CH(CH₃)CH₂-],
a 1,3-propanediyl group [-CH₂CH₂CH₂-],
a 2,2-dimethyl-1,3-propanediyl group [-CH₂C(CH3)₂CH₂-],
a 2, 2-dimethoxy-1,3-propanediyl group [-CH₂C(OCH₃)₂CH₂-],
a 2,2-dimethoxymethyl-1,3-propanediyl group
[-CH₂C(CH₂OCH₃)₂CH₂-],
a 1-methyl-1, 3-propanediyl group [-CH(CH₃)CH₂CH₂-],
a 1,4-butanediyl group [-CH₂CH₂CH₂CH₂-],
a 1,5-pentanediyl group [-CH₂CH₂CH₂CH₂CH₂-],
an oxydiethylene group [-CH₂CH₂OCH₂CH₂-],
a thiodiethylene group [-CH₂CH₂SCH₂CH₂-],
a 3-oxothiodiethylene group [-CH₂CH₂SOCH₂CH₂-],
a 3, 3-dioxothiodiethylene group [-CH₂CH₂SO₂CH₂CH₂-],
a 1,4-dimethyl-3-oxa-1,5-pentanediyl group [-CH(CH₃)CH₂O CH(CH₃)CH₂-],
a 3-oxopentanediyl group [-CH₂CH₂COCH₂CH₂-],
a 1,5-dioxo-3-oxapentanediyl group [-COCH₂OCH₂CO-],
a 4-oxa-1,7-heptanediyl group [-CH₂CH₂CH₂OCH₂CH₂CH₂-],
a 3,6-dioxa-1,8-octanediyl group [-CH₂CH₂OCH₂CH₂OCH₂CH₂-],
a 1,4,7-trimethyl-3,6-dioxa-1,8-octanediyl group [-CH(CH₃)CH₂O CH(CH₃)CH₂OCH(CH₃)CH₂-],
a 5,5-dimethyl-3,7-dioxa-1,9-nonanediyl group [-CH₂CH₂OCH₂C(CH₃)₂CH₂OCH₂CH₂-],
a 5,5-dimethoxy-3,7-dioxa-1,9-nonanediyl group [-CH₂CH₂OCH₂C(OCH₃)₂CH₂OCH₂CH₂-],
a 5,5-dimethoxymethyl-3,7-dioxa-1,9-nonanediyl group [-CH₂CH₂OCH₂C(CH₂OCH₃)₂CH₂OCH₂CH₂-],
a 4,7-dioxo-3,8-dioxa-1,10-decanediyl group [-CH₂CH₂O-COCH₂CH₂CO-OCH₂CH₂-],
a 3,8-dioxo-4,7-dioxa-1,10-decanediyl group [-CH₂CH₂CO-OCH₂CH₂O-COCH₂CH₂-],
a 1,3-cyclopentanediyl group [-1,3-C₅H₈-],
a 1,2-cyclohexanediyl group [-1,2-C₆H₁₀-],
a 1,3-cyclohexanediyl group [-1,3-C₆H₁₀-],
a 1,4-cyclohexanediyl group [-1,4-C₆H₁₀-],
a 2,5-tetrahydrofuranediyl group [2,5-C₄H₆O-],
a p-phenylene group [-P-C₆H₄-] ,
a m-phenylene group [-m-C₆H₄-],
an α,α'-o-xylylene group [-o-CH₂-C₆H₄-CH₂-],
an α,α'-m-xylylene group [-m-CH₂-C₆H₄-CH₂-],
an α,α'-p-xylylene group [-p-CH₂-C₆H₄-CH₂-],
a furane-2, 5-diyl-bismethylene group [2,5-CH₂-C₄H₂O-CH₂-],
a thiophene-2,5-diyl-bismethylene group [2,5-CH₂-C₄H₂S-CH₂-],
an isopropylidene-p-phenylene group [-p-C₆H₄-C (CH₃)₂-p-C₆H₄-],

L₁ may have a substituent. Examples of the substituent include a halogen atom (for example, a chlorine atom, a bromine atom, or a fluorine atom), an alkyl group having a carbon atom number of from 1 to 6 (for example, a methyl group, an ethyl group, a propyl group, an isopropyl group, or a butyl group), an alkoxy group having a carbon atom number of from 1 to 6 (for example, a methoxy group, an ethoxy group, an n-propoxy group, an isopropoxy group, a n-butoxy group or a tert-butoxy group), an acyl group (for example, an acetyl group, a propionyl group, or a trifluoroacetyl group), an acyloxy group (for example, an acetoxy group, a propionyloxy group, or a trifluoroacetoxy group), and an alkoxycarbonyl group (for example, a methoxycarbonyl group, an ethoxycarbonyl group, or a tert-butoxycarbonyl group) . Preferred substituents are a halogen atom, an alkyl group, and an alkoxy group. R₄₀₅ and the substituent of L₁ and R₄₀₅ may combine with each other to form a ring.

L₁ is preferably a divalent linkage group having a carbon atom number of from 1 to 8, which may contain an oxygen atom or a sulfur atom in the main chain, and more preferably a divalent linkage group having a carbon atom number of from 1 to 5, the main chain of which consists of a carbon atom.

In formula (64), R₅₀₅ represents a substituted or unsubstituted alkyl group, and preferably an alkyl group having a carbon atom number of from 1 to 6 (for example, a methyl group, an ethyl group, a propyl group, an isopropyl group, or a butyl group). Examples of the substituent include an alkoxy group having a carbon atom number of from 1 to 6 (for example, a methoxy group, an ethoxy group, an n-propoxy group, an isopropoxy group, a n-butoxy group or a tert-butoxy group), an acyl group (for example, an acetyl group, a propionyl group, or a trifluoroacetyl group), an acyloxy group (for example, an acetoxy group, a propionyloxy group, or a trifluoroacetoxy group), and an alkoxycarbonyl group (for example, a methoxycarbonyl group, an ethoxycarbonyl group, or a tert-butoxycarbonyl group). Preferred substituents are a halogen atom, and an alkoxy group.

R₅₀₆ represents a substituent, and m5 is an integer of from 0 to 3. Examples of the substituent represented by R₅₀₆ include a halogen atom (for example, a chlorine atom, a bromine atom, or a fluorine atom), an alkyl group having a carbon atom number of from 1 to 6 (for example, a methyl group, an ethyl group, a propyl group, an isopropyl group, or a butyl group), an alkoxy group having a carbon atom number of from 1 to 6 (for example, a methoxy group, an ethoxy group, an n-propoxy group, an isopropoxy group, a n-butoxy group or a tert-butoxy group). When m5 is 2 or more, plural R₅₀₆ may be the same or different.

L₂ represents an oxygen atom or a divalent linkage group having a carbon number of from 1 to 15, provided that the divalent linkage group may contain an oxygen atom or a sulfur atom in the main chain. Examples of the divalent linkage group include the following groups and a group having a carbonyl group at each of the both ends thereof:
a methylene group [-CH₂-],
an ethylidene group [>CHCH₃],
an isopropylidene group [>C(CH₃)₂],
a 1,2-ethylene group [-CH₂CH₂-],
a 1,2-ethylene-1,2-dioxy group [-O-CH₂CH₂-O-],
a 1,2-propylene-1,2-dioxy group [-O-CH (CH₃) CH₂-O-] ,
a 1,3-propanediyl-1,3-dioxy group [-O-CH₂CH₂CH₂-O-],
a 2,2-dimethyl-1,3-propanediyl-1,3-dioxy group [-O-CH₂C (CH₃)₂CH₂-O-],
a 2,2-dimethoxy-1,3-propanediyl-1,3-dioxy group [-O-CH₂C(OCH₃)₂CH₂-O-],
a 2,2-dimethoxymethyl-1,3-propanediyl group [-O-CH₂C(CH₂OCH₃)₂CH₂-O-],
a 1-methyl-1,3-propanediyl-1,3-dioxy group [-O-CH (CH₃) CH₂CH₂-O-] ,
a 1,4-butanediyl-1,4-dioxy group [-O-CH₂CH₂CH₂CH₂-O-],
a 1,5-pentanediyl-1,5-dioxy group [-O-CH₂CH₂CH₂CH₂CH₂-O-],
an oxydiethylene-1,5-dioxy group [-O-CH₂CH₂OCH₂CH₂-O-],
a thiodiethylene-1,5-dioxy group [-O-CH₂CH₂SCH₂CH₂-O-],
a 3-oxothiodiethylene-1,5-dioxy group [-O-CH₂CH₂SOCH₂CH₂-O-],
a 3,3-dioxothiodiethylene-1,5-dioxy group [-O-CH₂CH₂SO₂CH₂CH₂-O-],
a 1,4-dimethyl-3-oxa-1,5-pentanediyl-1,5-dioxy group [-O-CH (CH₃) CH₂OCH (CH₃)CH₂-O-],
a 3-oxopentanediyl-1,5-dioxy group [-O-CH₂CH₂COCH₂CH₂-O-],
a 1,5-dioxo-3-oxapentanediyl-1,5-dioxy group [-O-COCH₂OCH₂CO-O-],
a 4-oxa-1,7-heptanediyl-1,7-dioxy group [-O-CH₂CH₂CH₂OCH₂CH₂CH₂-O-],
a 3,6-dioxa-1,8-octanediyl-1,8-dioxy group [-O-CH₂CH₂OCH₂CH₂OCH₂CH₂-O-],
a 1,4,7-trimethyl-3,6-dioxa-1,8-octanediyl-1,8-dioxy group [-O-CH(CH₃)CH₂O CH(CH₃)CH₂OCH(CH₃)CH₂-O-],
a 5,5-dimethyl-3,7-dioxa-1,9-nonanediyl-1,9-dioxy group [-O-CH₂CH₂OCH₂C(CH₃)₂CH₂OCH₂CH₂-O-],
a 5,5-dimethoxy-3,7-dioxa-1,9-nonanediyl-1,9-dioxy group [-O-CH₂CH₂OCH₂C(OCH₃)₂CH₂OCH₂CH₂-O-],
a 5,5-dimethoxymethyl-3,7-dioxa-1,9-nonanediyl-1,9-dioxy group [-O-CH₂CH₂OCH₂C(CH₂OCH₃)₂CH₂OCH₂CH₂-O-],
a 4,7-dioxo-3,8-dioxa-1,10-decanediyl-1,10-dioxy group [-O-CH₂CH₂O-COCH₂CH₂CO-OCH₂CH₂-O-],
a 3,8-dioxo-4,7-dioxa-1,10-decanediyl-1,10-dioxy group [-O-CH₂CH₂CO-OCH₂CH₂O-COCH₂CH₂-O-],
a 1,3-cyclopentanediyl-1,3-dioxy group [-1,3-O-C₅H₈-O-],
a 1,2-cyclohexanediyl-1,2-dioxy group [-1,2-O-C₆H₁₀-O-],
a 1,3-cyclohexanediyl-1,3-dioxy group [-1,3-O-C₆H₁₀-O-],
a 1,4-cyclohexanediyl-1,4-dioxy group [-1,4-O-C₆H₁₀-O-],
a 2,5-tetrahydrofuranediyl-2,5-dioxy group [2,5-O-C₄H₆O-O-],
a p-phenylene-1,4-dioxy group [-p-O-C₆H₄-O-],
a m-phenylene-1,3-dioxy group [-m-O-C₆H₄-O-],
an o-xylylene-α,α'-dioxy group [-o-O-CH₂-C₆H₄-CH₂-O-],
a m-xylylene-α,α'-dioxy group [-m-O-CH₂-C₆H₄-CH₂-O-],
a p-xylylene-α,α'-dioxy group [-p-O-CH₂-C₆H₄-CH₂-O-],
a furane-2,5-diyl-bismethylene-α,α'-dioxy group [2,5-O-CH₂-C₄H₂O-CH₂-O-],
a thiophene-2,5-diyl-bismethylene-α,α'-dioxy group [2,5-O-CH₂-C₄H₂S-CH₂-O-]

L₂ may have a substituent. Examples of the substituent include a halogen atom (for example, a chlorine atom, a bromine atom, or a fluorine atom), an alkyl group having a carbon atom number of from 1 to 6 (for example, a methyl group, an ethyl group, a propyl group, an isopropyl group, or a butyl group), an alkoxy group having a carbon atom number of from 1 to 6 (for example, a methoxy group, an ethoxy group, an n-propoxy group, an isopropoxy group, a n-butoxy group or a tert-butoxy group), an acyl group (for example, an acetyl group, a propionyl group, or a trifluoroacetyl group), an acyloxy group (for example, an acetoxy group, a propionyloxy group, or a trifluoroacetoxy group), and an alkoxycarbonyl group (for example, a methoxycarbonyl group, an ethoxycarbonyl group, or a tert-butoxycarbonyl group) . Preferred substituents are a halogen atom, an alkyl group, and an alkoxy group. R₅₀₅ and the substituent of L₂ may combine with each other to form a ring.

L₂ is preferably an oxygen atom or a divalent linkage group having a carbon atom number of from 1 to 8, which may contain an oxygen atom or a sulfur atom in the main chain, and more preferably an oxygen atom or a divalent linkage group having a carbon atom number of from 1 to 5, which may contain an oxygen atom or a sulfur atom in the main chain.

Typical examples of the bifunctional oxetane compound used in the invention will be listed below, but the invention is not limited thereto. In the examples listed below, Compounds (60-1) through (60-12) below belong to formula (60) above, Compounds (61-1) through (61-12) below belong to formula (61) above, Compounds (62-1) through (62-23) below belong to formula (62) above, Compounds (63-1) through (63-31) below belong to formula (63) above, and Compounds (64-1) through (64-20) below belong to formula (64) above.

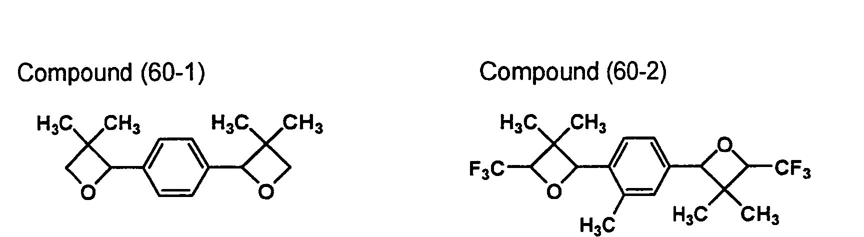

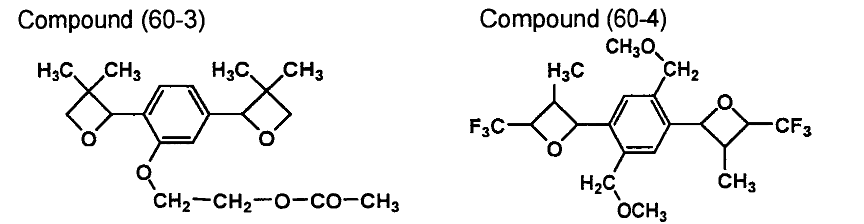

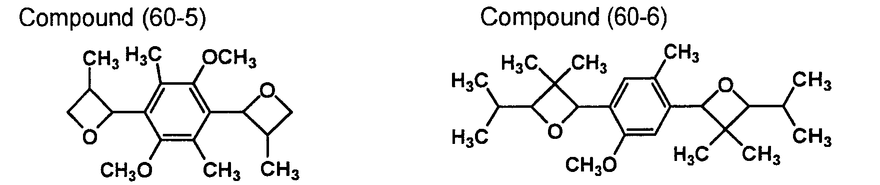

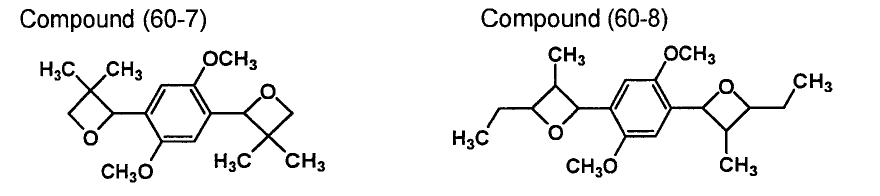

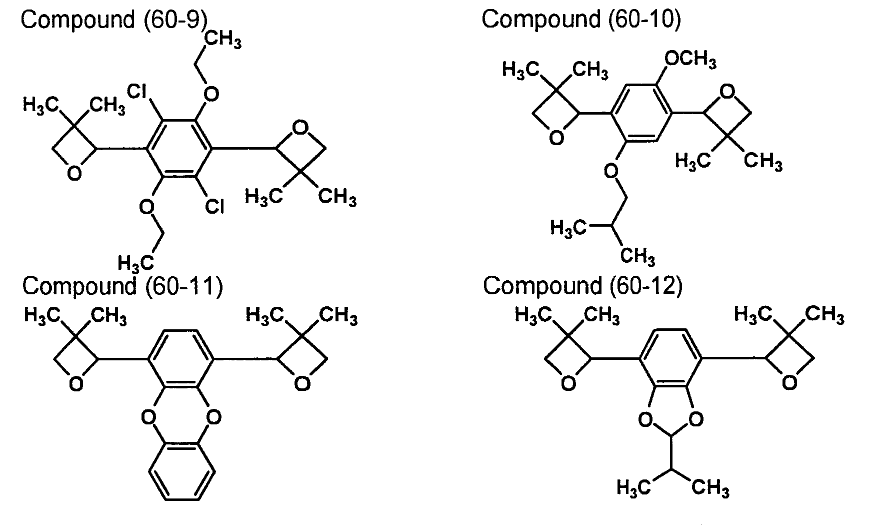

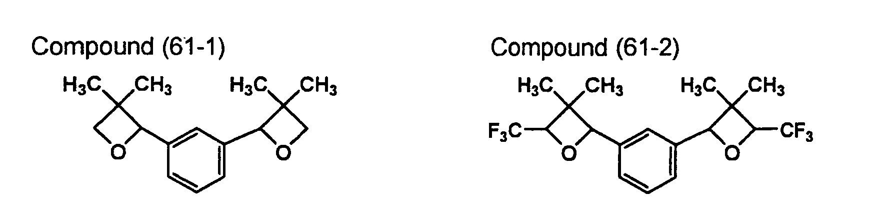

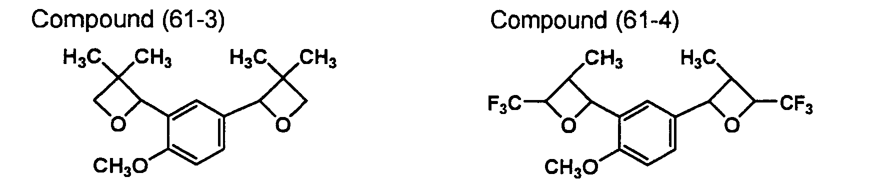

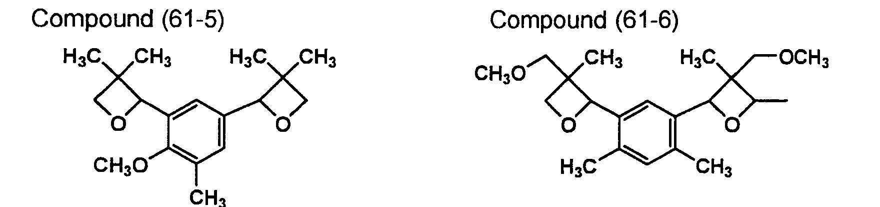

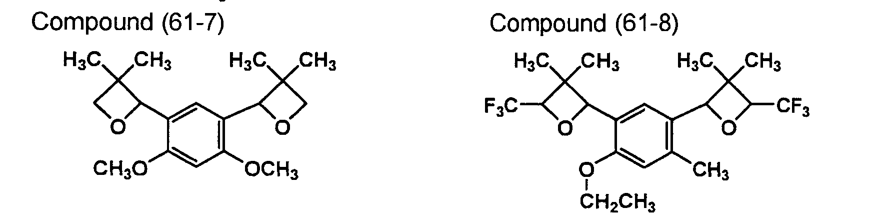

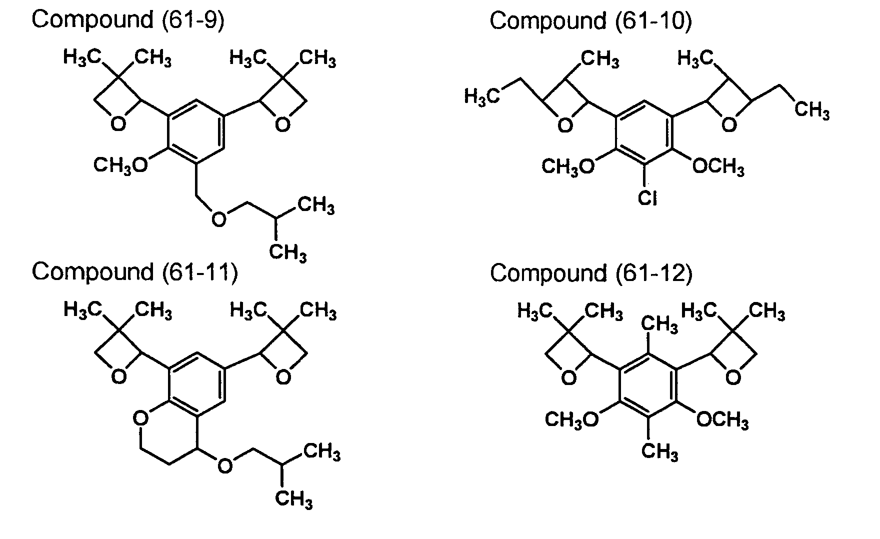

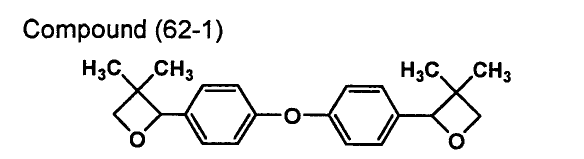

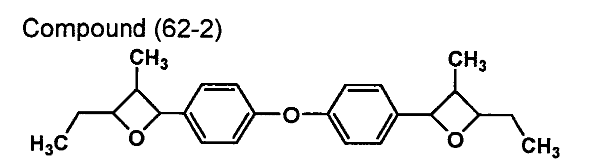

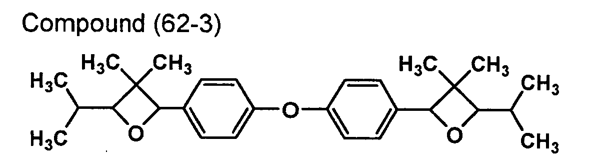

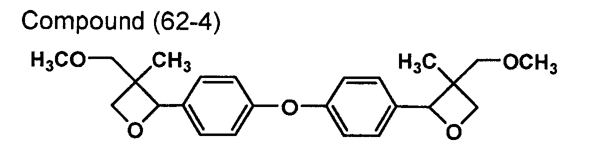

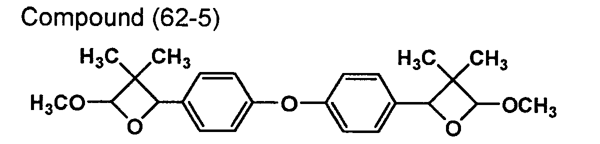

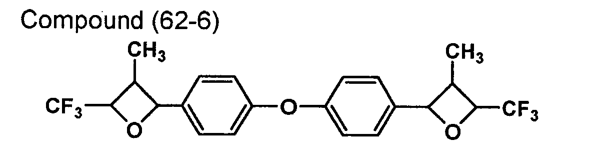

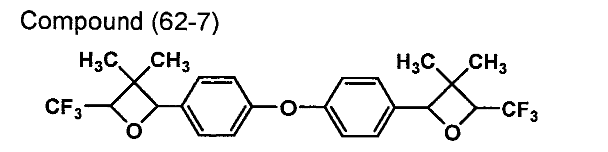

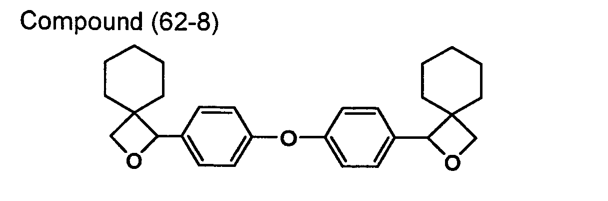

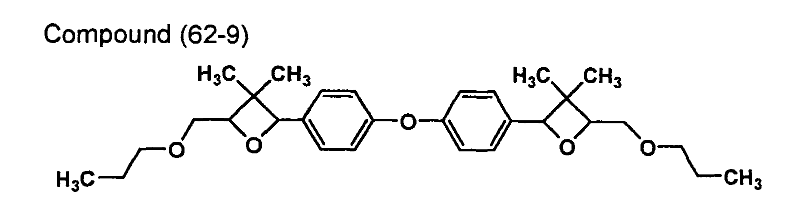

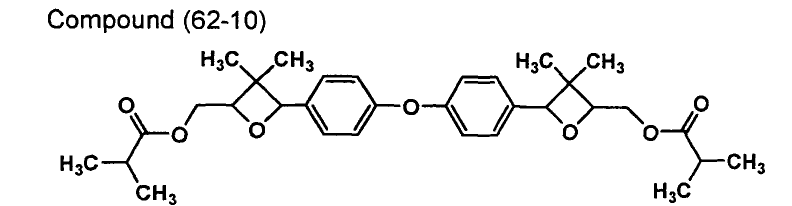

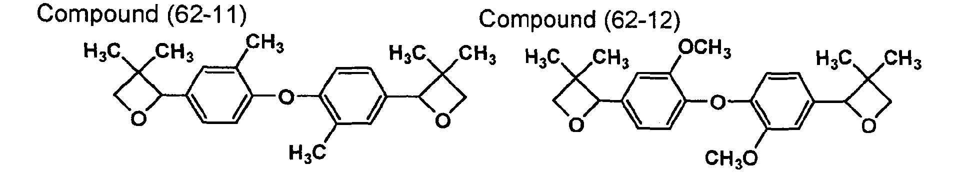

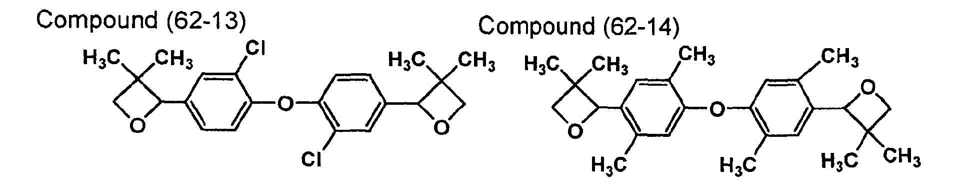

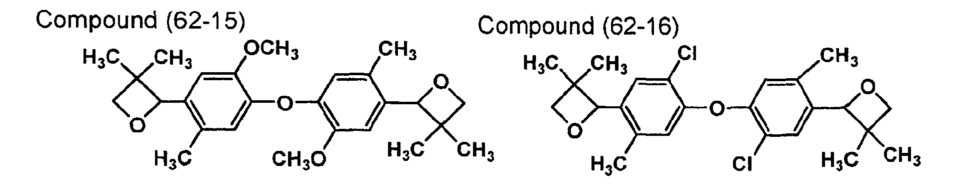

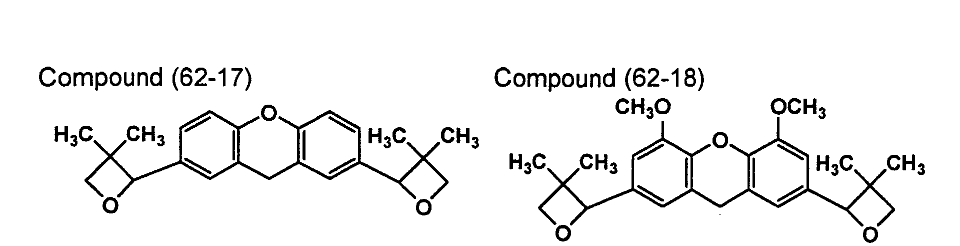

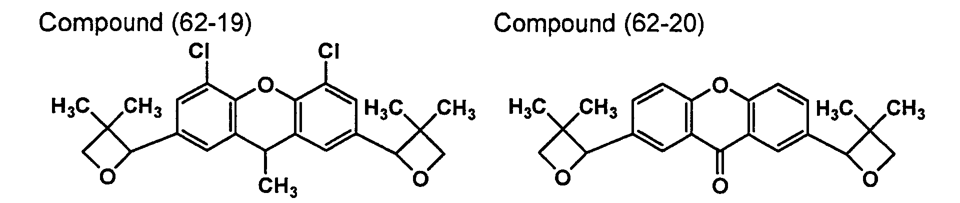

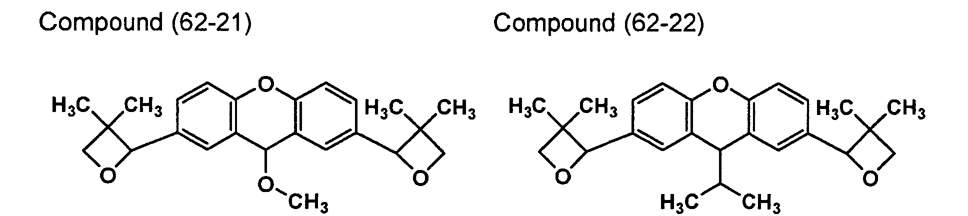

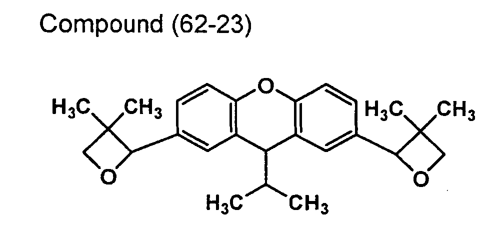

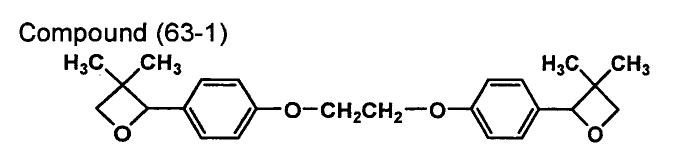

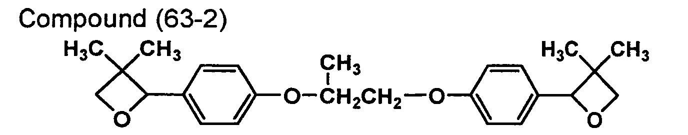

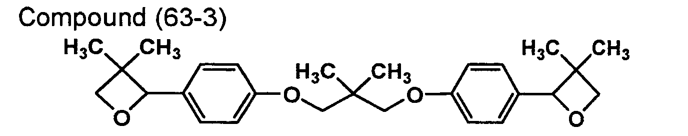

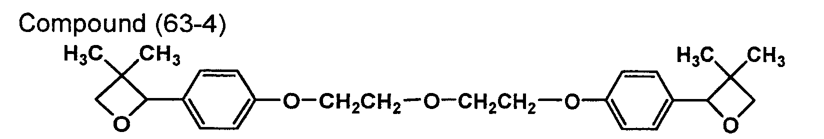

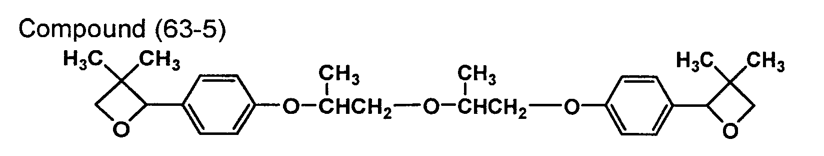

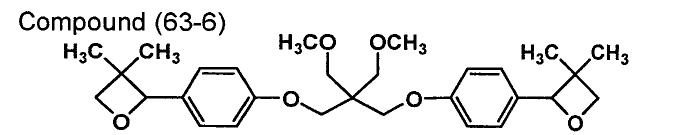

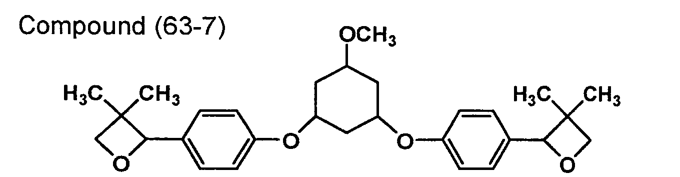

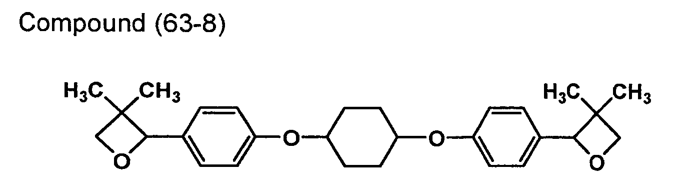

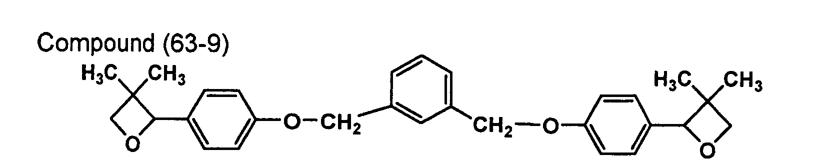

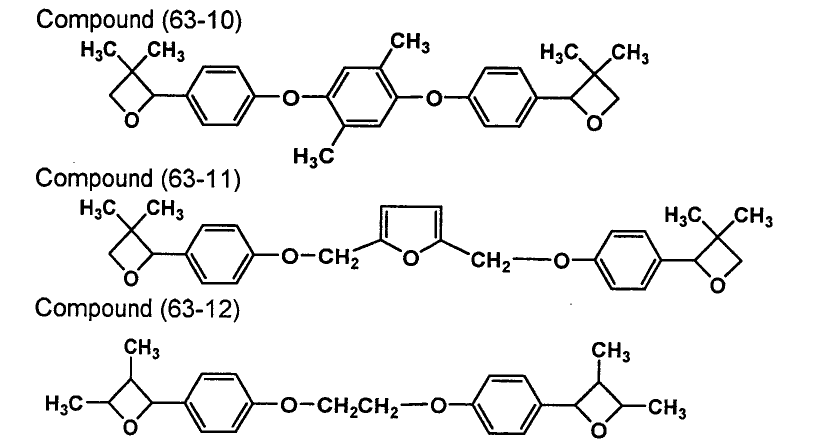

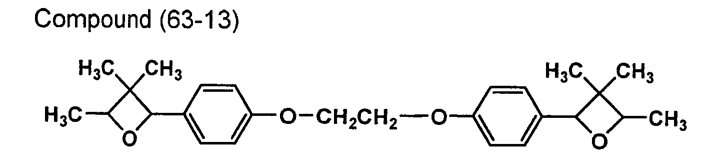

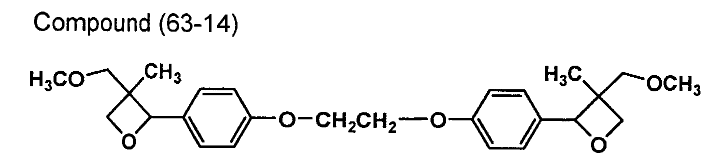

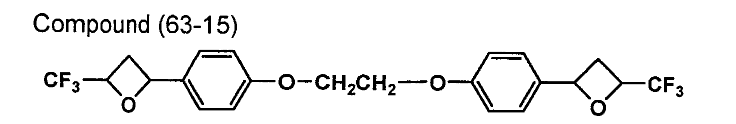

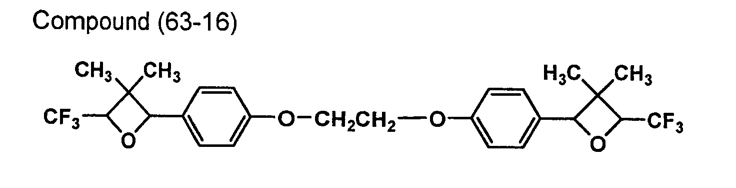

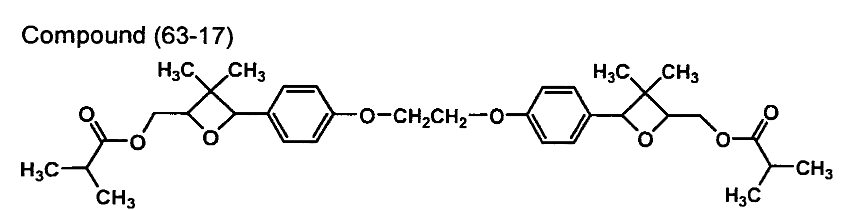

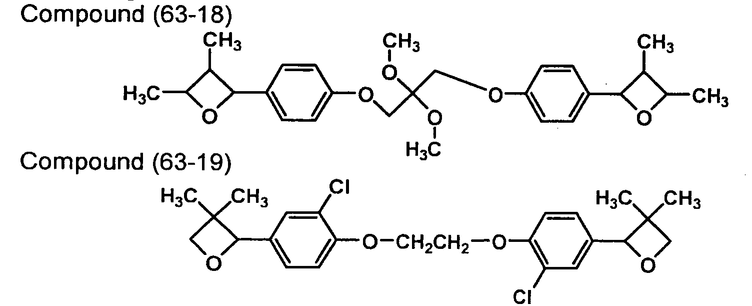

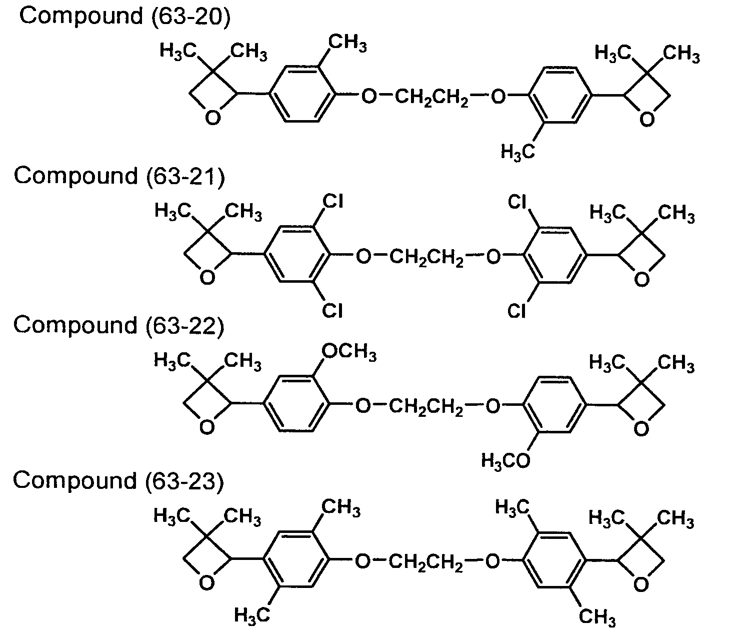

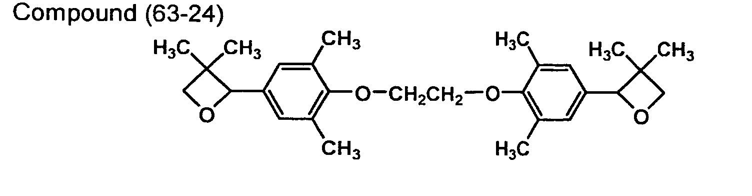

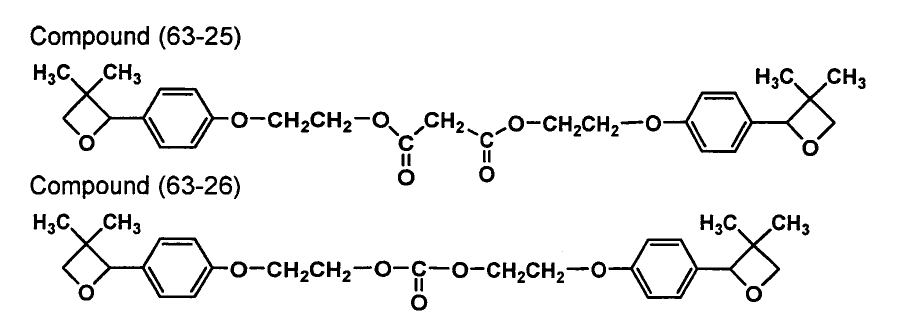

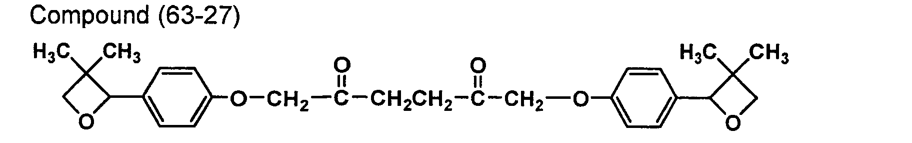

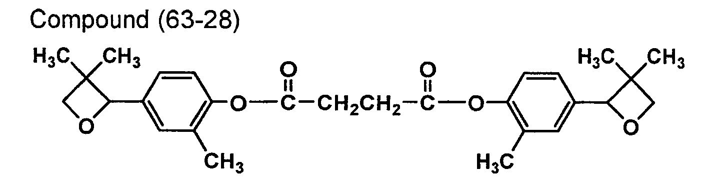

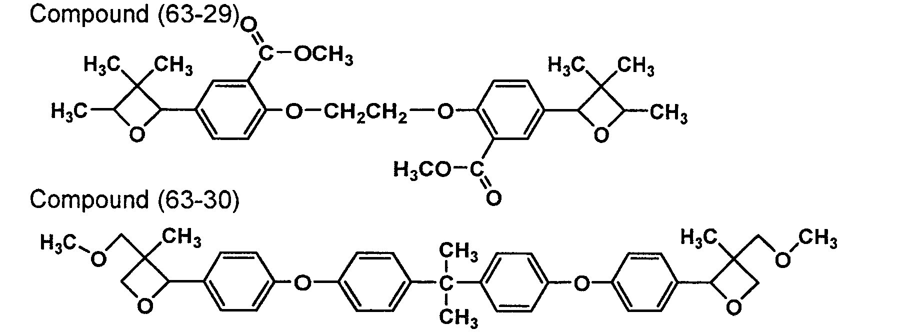

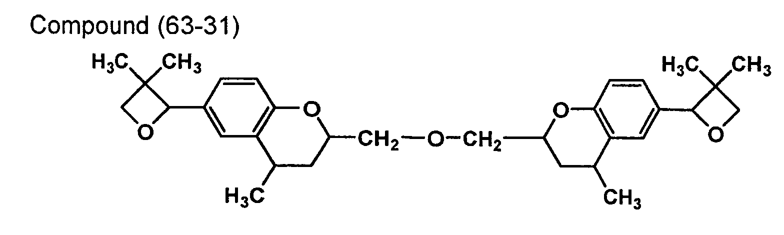

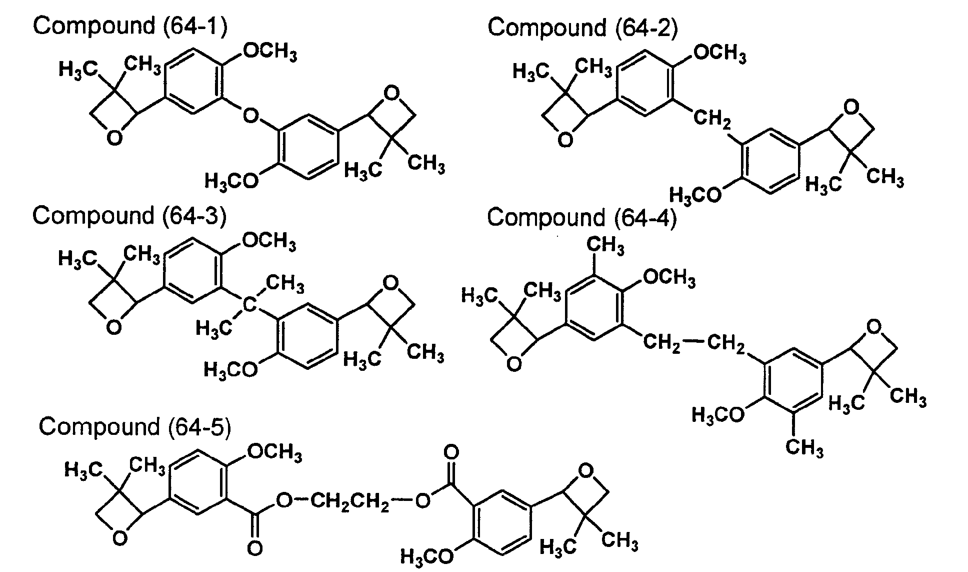

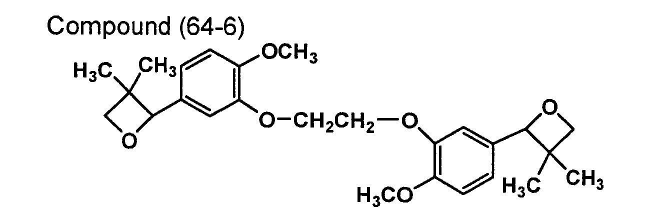

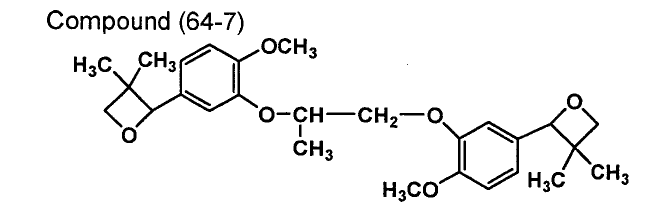

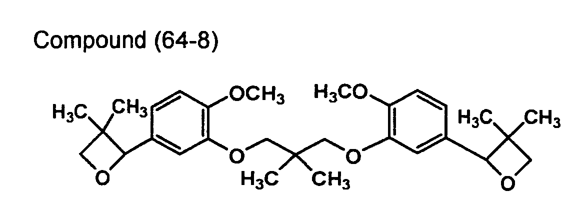

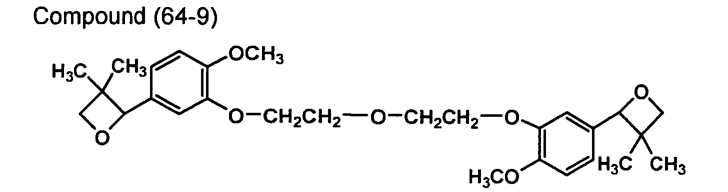

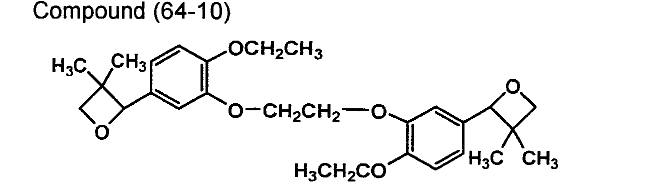

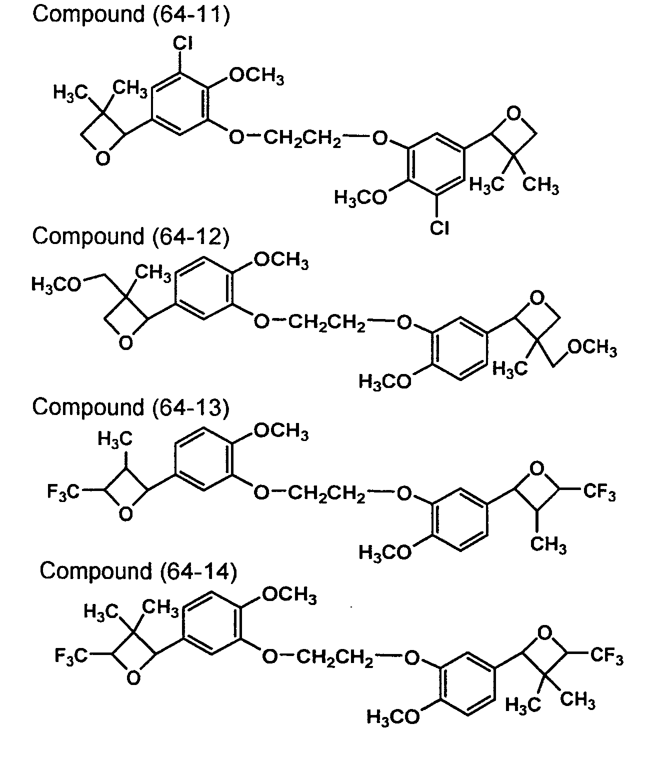

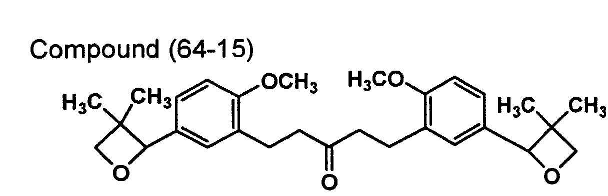

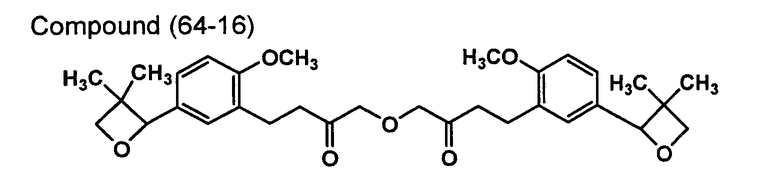

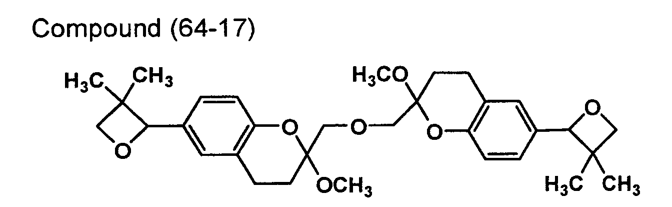

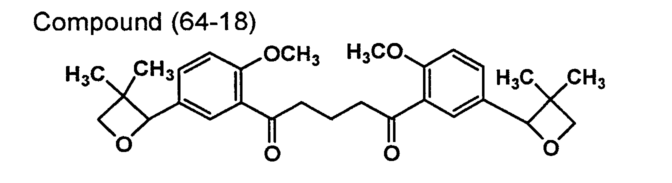

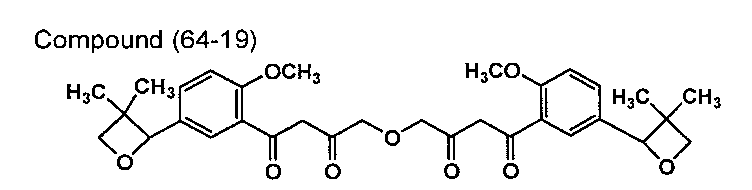

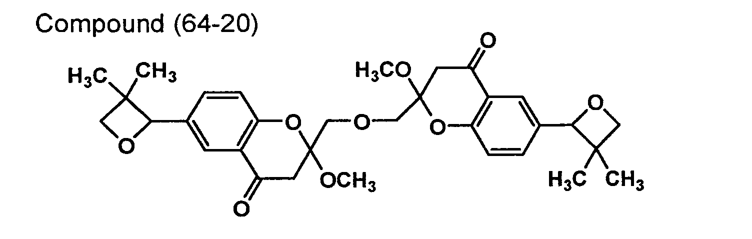

The above bifunctional oxetane compound can be synthesized according to a method described in the following literatures A through L.
A: Hu Xianming, Richard M. Kellogg, Synthesis, 533-538, May (1955).
B: A.O. Fitton, J. Hill, D. Ejane, R. Miller, Synth., 12, 1140 (1987).
C: Toshiro Imai and Sinya Nishida, Can. J. Chem. Vol. 59, 2503-2509 (1981).
D: Nobujiro Shimizu, Shintaro Yamaoka, and Yuho Tsuno, Bull. Chem. Soc. Jpn., 56, 3853-3854 (1983).
E: Walter Fisher and Cyril A. Grob, Helv. Chim. Acta., 61, 2336 (1978).
F: Chem. Ber., 101, 1850 (1968).
G: "Heterocyclic Compounds with Three- and Four-membered Rings", Part Two, Chapter IX, Interscience Publishers, John Wiley & Sons, New York (1964).
H: Bull. Chem. Soc. Jpn., 61, 1653 (1988)
I: Pure Appl. Chem., A29 (10), 915 (1992)
J: Pure Appl. Chem., A30 (2 & amp; 3), 189 (1993)
K: Japanese Patent O.P.I. Publication No. 6-16804
L: German Patent No. 1,021,858

### [Monofunctional oxetane compound (G-2)]

Examples of a monofunctional oxetane compound include compounds represented by the following formulae (80), (81), (82), and (83).

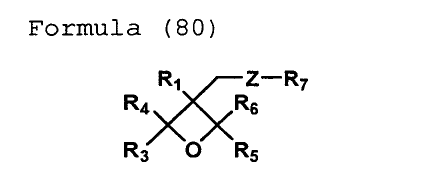

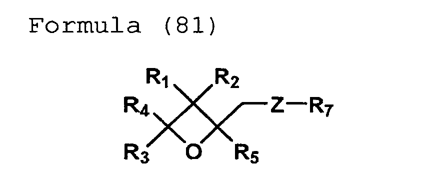

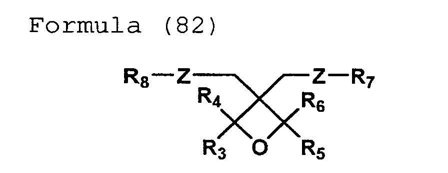

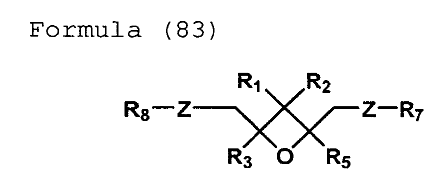

In formulae (80) through (83), Z represents an oxygen atom, a sulfur atom, or a divalent hydrocarbon group which may have an oxygen atom or a sulfur atom in the main chain; R₁ through R₆ independently represent a hydrogen atom, a fluorine atom, an alkyl group having from 1 to 6 carbon atoms such as a methyl group, an ethyl group, a propyl group, a butyl group, etc., a fluoroalkyl group having from 1 to 6 carbon atoms, an allyl group, an aryl group, a furyl group, or a thienyl group; and R₇ and R₈ independently represent an alkyl group having from 1 to 6 carbon atoms such as a methyl group, an ethyl group, a propyl group, a butyl group, etc., an alkenyl group having from 2 to 6 carbon atoms such as a 1-propenyl group, a 2-propenyl group, a 2-methyl-1-propenyl group, a 2-methyl-2-propenyl group, a 1-butenyl group, a 2-butenyl group, a 3-butenyl group, etc., an aromatic ring-containing group such as a phenyl group, a benzyl group, a fluorobenzyl group, a methoxybenzyl group, a phenoxyethyl group, etc., an alkylcarbonyl group having from 2 to 6 carbon atoms such as an ethylcarbonyl group, a propylcarbonyl group, a butylcarbonyl group, etc., an alkoxycarbonyl group having from 2 to 6 carbon carbons such as an ethoxycarbonyl group, a propoxycarbonyl group, a butoxycarbonyl group, etc., an N-alkylcarbamoyl group having from 2 to 6 carbon atoms such as an ethylcarbamoyl group, or a propylcarbamoyl group, a butylcarbamoyl group, a pentylcarbamoyl, etc. In formulae 80 and 82, R₃ through R₆ are not simultaneously hydrogen atoms.

Preferred monofunctional oxetane compounds used in the invention are compounds in which in formulae (80) through (83), R₁ and R₂ independently represent a lower alkyl group (particularly a methyl group), in formulae (80) and (82) one of R₃ and R₆ is a phenyl group having an alkoxy group, and in formulae (81) and (83) R₇ and R₈ independently represent a propyl group, a butyl group, a phenyl group or a benzyl group, and Z is a hydrocarbon group containing no oxygen atom nor sulfur atom.

Examples of the monofunctional oxetane compound used in the invention will be shown below. The monofunctional oxetane compound used in the invention is not limited to a compound represented by formula (84) below.

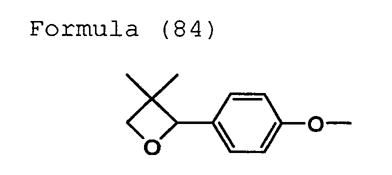

The ink used in the invention preferably contains another oxetane compound, an epoxy compound, or a vinyl ether compound as a cation-polymerizable compound.

### [Another oxetane compound (A) as cation-polymerizable compound]

Next, another oxetane compound (A) will be explained. In the invention, as another oxetane compound (A), the oxetane compounds can be used which are disclosed in Japanese Patent O.P.I. Publication Nos. 2001-220526 and 2001-310937. When an ink composition contains an oxetane compound having five or more oxetane rings, viscosity of the ink composition increases or glass transition point of the ink composition is elevated, which may result in difficulty to handling, and poor adhesion of cured ink composition to a recording medium. Therefore, an oxetane compound having 1 to 4 oxetane rings is preferred.

Next, the oxetane compound will be explained, but the invention is not limited thereto. As one example of an oxetane compound having one oxetane ring, an oxetane compound represented by the following formula (1) is cited.

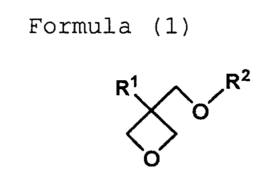

In formula (1), R¹ represents a hydrogen atom, an alkyl group having from 1 to 6 carbon atoms such as a methyl group, an ethyl group, a propyl group, a butyl group, etc.; a fluoroalkyl group having from 1 to 6 carbon atoms; an allyl group; an aryl group; a furyl group; or a thienyl group; and R² represents an alkyl group having from 1 to 6 carbon atoms such as a methyl group, an ethyl group, a propyl group, a butyl group, etc.; an alkenyl group having from 2 to 6 carbon atoms such as a 1-propenyl group, a 2-propenyl group, a 2-methyl-1-propenyl group, a 2-methyl-2-propenyl group, a 1-butenyl group, a 2-butenyl group, a 3-butenyl group, etc.), an aromatic ring-containing group such as a phenyl group, a benzyl group, a fluorobenzyl group, a methoxybenzyl group; a phenoxyethyl group, etc.; an alkylcarbonyl group having from 2 to 6 carbon atoms such as an ethylcarbonyl group, a propylcarbonyl group, a butylcarbonyl group, etc.; an alkoxycarbonyl group having from 2 to 6 carbon carbons such as an ethoxycarbonyl group, a propoxycarbonyl group, a butoxycarbonyl group, etc.; an N-alkylcarbamoyl group having from 2 to 6 carbon atoms such as an ethylcarbamoyl group, a propylcarbamoyl group, a butylcarbamoyl group, a pentylcarbamoyl, etc. The oxetane compound used in the invention is preferably a compound having one oxetane ring in that the composition containing such a compound is excellent in tackiness, low in viscosity, and is easy to handle.

As one example of an oxetane compound having two oxetane rings, an oxetane compound represented by the following formula (2) is cited.

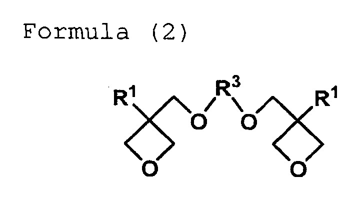

In formula (2), R¹ represents the same group as those denoted in R₁ in formula 1; and R³ represents a straight chained or branched alkylene group such as an ethylene group, a propylene group, a butylene group, etc.; a straight chained or branched polyalkyleneoxy group such as a poly(ethyleneoxy) group, a poly(propyleneoxy group, etc.; a straight chained or branched unsaturated divalent hydrocarbon group such a propenylene group, a methylpropenylene group, a butenylene group, etc.; an alkylene group containing a carbonyl group; an alkylene group containing a carbonyloxy group; or an alkylene group containing a carbamoyl group.

R³ also represents a polyvalent group selected from groups represented by the following formulae (3), (4), and (5).

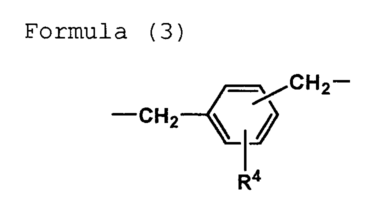

In formula (3), R⁴ represents a hydrogen atom, an alkyl group having from 1 to 4 carbon atoms such as a methyl group, an ethyl group, a propyl group, a butyl group, etc.; an alkoxy group having from 1 to 4 carbon atoms such as a methoxy group, an ethoxy group, a propoxy group, a butoxy group, etc.; a halogen atom such as a chlorine atom, a bromine atom, etc.; a nitro group; a cyano group; a mercapto group; a lower alkylcarboxy group; a carboxyl group; or a carbamoyl group.

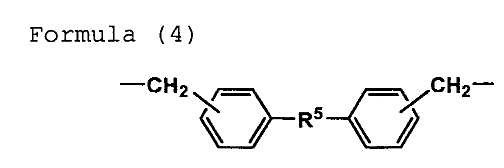

In formula (4), R⁵ represents an oxygen atom, a sulfur atom, a methylene group, -NH-, -SO-, -SO₂-, -(CF₃)₂-, or -C(CH₃)₂-.

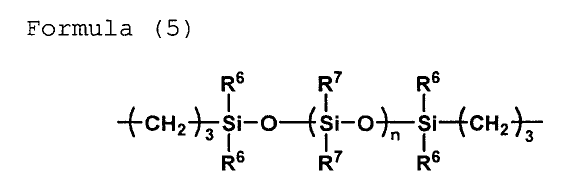

In formula (5), R⁶ represents an alkyl group having from 1 to 4 carbon atoms such as a methyl group, an ethyl group, a propyl group, a butyl group, etc., or an aryl group; "n" represents an integer of from 0 to 2000; and R⁷ represents an alkyl group having from 1 to 4 carbon atoms such as a methyl group, an ethyl group, a propyl group, a butyl group, etc, or an aryl group, or a group represented by the following formula (6).

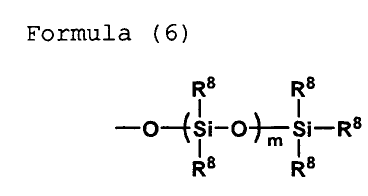

In formula (6), R⁸ represents an alkyl group having from 1 to 4 carbon atoms such as a methyl group, an ethyl group, a propyl group, a butyl group, etc., or an aryl group; and m represents an integer of from 0 to 100.

Examples of a compound having two oxetane rings include the following formulae (7) and (8).

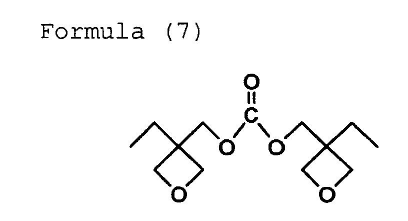

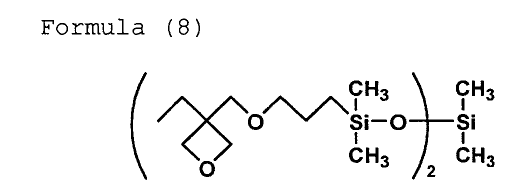

Compound of formula (7) is a compound in which in formula (2), R¹ is an ethyl group, and R³ is a carbonyl group. Compound of formula (8) is a compound in which in formula 2, R¹ is an ethyl group, and R³ is a group in which in formula (5), R⁶ is a methyl group, R⁷ is a methyl group, and n is 1.

As another example of an oxetane compound having two oxetane rings, an oxetane compound represented by the following formula (9) is cited.

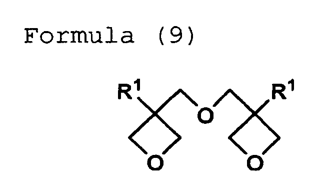

In formula (9), R¹ is the same as those denoted in R¹ of formula (1).

As an example of an oxetane compound having three or four oxetane rings, an oxetane compound represented by the following formula (10) is cited.

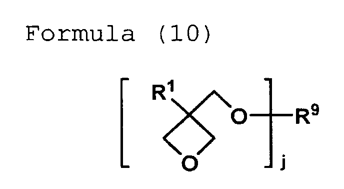

In formula (10), R¹ is the same as those denoted in R¹ of formula (1); and R⁹ represents a branched alkylene group having 1 to 12 carbon atoms such as a group represented by formula (11), (12) or (13) below, a branched polyalkyleneoxy group such as a group represented by formula (14) below, or a branched alkylene group containing a silylether group such as a group represented by (15) below. In formula (10), j represents an integer of 3 or 4.

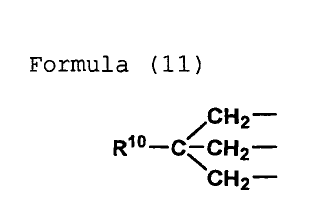

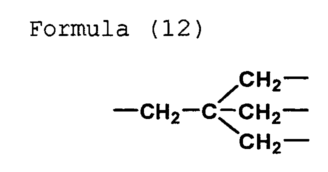

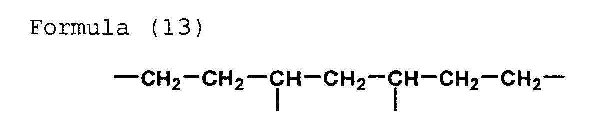

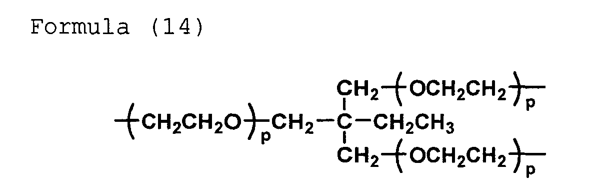

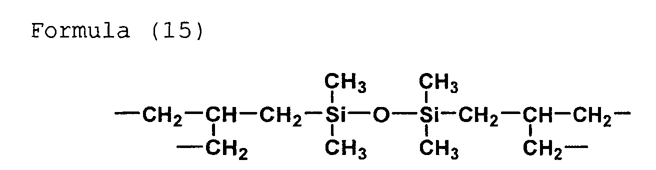

In formula (11), R¹⁰ represents a lower alkyl group such as a methyl group, an ethyl group, or a propyl group. In formula (14), p represents an integer of from 1 to 10.

As an example of an oxetane compound having four oxetane rings, a compound represented by formula (16) below is cited.

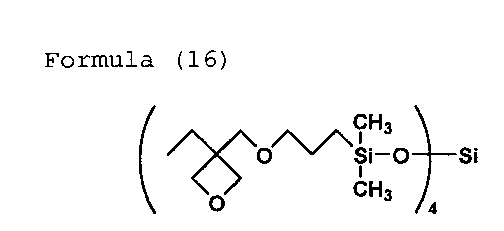

As a compound having 1 to 4 oxetane rings other than the compounds described above, a compound represented by formula (17) below is cited.

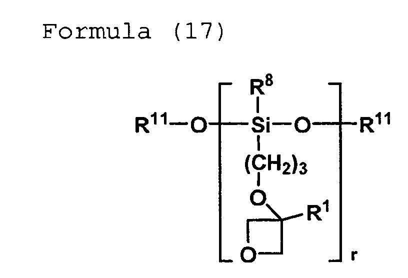

In formula (17), R⁸ is the same as those denoted in R⁸ of formula (6); R¹¹ represents an alkyl group having 1 to 4 carbon atoms such as a methyl group, an ethyl group, or a propyl group, or a trialkylsilyl group; r represents an integer of from 1 to 4; and R¹ is the same as those denoted in R¹ of formula (6).

The preferred oxetane compounds used in the invention are compounds (18), (19) and (20) as shown below.

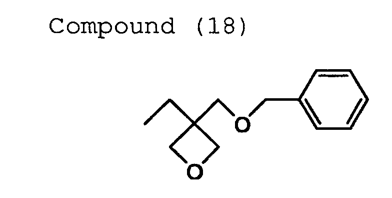

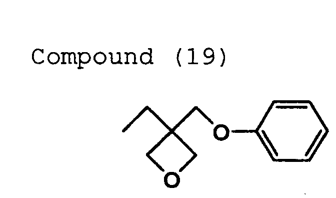

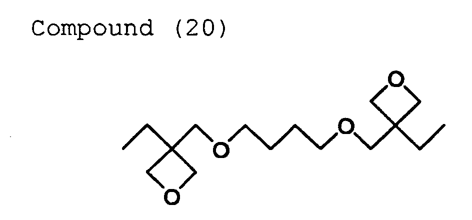

Synthetic method of the above-described oxetane compounds is not specifically limited, and known methods can be used. There is, for example, a method disclosed in D. B. Pattison, J. Am. Chem. Soc., 3455, 79 (1957) in which an oxetane ring is synthesized from diols.

Besides the above-described oxetane compounds, polymeric oxetane compounds having 1 to 4 oxetane rings with a molecular weight of 1000 to 5000 can be used. Examples thereof include compounds (21), (22) and (23) below.

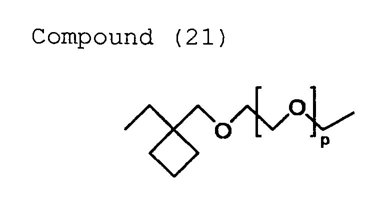

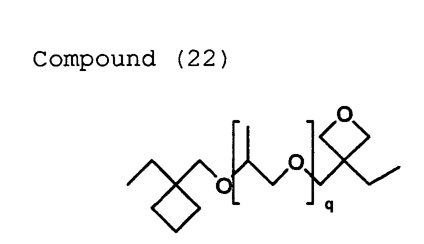

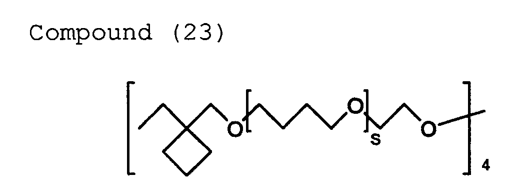

In formula (21), p represents an integer of from 20 to 200, in formula (22), q represents an integer of from 15 to 100, and in formula (23), s represents an integer of from 20 to 200.

### [Epoxy compound as cation-polymerizable compound]

Next, epoxy compound will be explained. In the invention, as the epoxy compound, there are an aromatic epoxide, an alicyclic epoxide and an aliphatic epoxide.

A preferable aromatic epoxide is a di- or poly-glycidyl ether manufactured by a reaction of polyhydric phenol having at least one aromatic ring or of an alkylene oxide adduct thereof with epichlorohydrin, and includes, for example, such as di- or poly-glycidyl ether of bisphenol A or of an alkylene oxide adduct thereof, di- or poly-glycidyl ether of hydrogenated bisphenol A or of an alkylene oxide adduct thereof and novolac type epoxy resin. Herein, alkylene oxide includes such as ethylene oxide and propylene oxide.

An alicyclic epoxide is preferably a compound containing cyclohexene oxide or cyclopentene oxide obtained by epoxydizing a compound having at least one cycloalkane ring such as cyclohexene or cyclopentene by use of a suitable oxidizing agent such as hydrogen peroxide or a peracid.

A preferable aliphatic epoxide is such as di- or polyglycidyl ether of aliphatic polyhydric alcohol or of an alkylene oxide adduct thereof; the typical examples include diglycidyl ether of alkylene glycol, such as diglycidyl ether of ethylene glycol, diglycidyl ether of propylene glycol and diglycidyl ether of 1,6-hexane diol; polyglycidyl ether of polyhydric alcohol such as di- or triglycidyl ether of glycerin or of an alkylene oxide adduct thereof; and diglycidyl ether of polyalkylene glycol such as diglycidyl ether of polyethylene glycol or of an alkylene oxide adduct thereof and diglycidyl ether of polypropylene glycol or of an alkylene oxide adduct thereof. Herein, alkylene oxide includes such as ethylene oxide and propylene oxide.

Among these epoxides such as the aromatic, alicyclic and aliphatic epoxides, aromatic epoxide and alicyclic epoxide are preferable and alicyclic epoxide is specifically preferable, taking a quick curing property in consideration. In the invention, one kind of epoxides described above alone may be utilized, and suitable combinations of two or more kinds thereof may also be utilized.

### [Vinyl ether compound as cation-polymerizable compound (A)]

Examples of the vinyl ether compounds include di- or tri-vinyl ether compounds such as ethylene glycol divinyl ether, diethylene glycol divinyl ether, triethylene glycol divinyl ether, propylene glycol divinyl ether, dipropylene glycol divinyl ether, butane diol divinyl ether, hexane diol divinyl ether, cyclohexane dimethanol divinyl ether, and trimethylol propane trivinyl ether; and mono vinyl ether compounds such as ethyl vinyl ether, n-butyl vinyl ether, iso-butyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-o-propylene carbonate, dodecyl vinyl ether, diethylene glycol monovinyl ether and octadecyl vinyl ether.

In these vinyl ether compounds, when the hardenability of ink, adhesion of ink to a recording medium or surface hardness of ink is considered, di- or tri-vinyl ether compounds are preferable, and particularly divinyl ether compounds are preferable. In the present invention, these vinyl ether compounds may be used alone or as an admixture of two or more kinds thereof.

### [Photoinitiator (B)]

The photoinitiator in the invention is a reagent capable of initiating polymerization reaction of the above cation polymerizable compound. As the photoinitiator, there are a bond opening type photoinitiator and a hydrogen withdrawing type photoinitiator. In the invention, the former and the latter may be used singly or as a mixture of two or more kinds thereof.

Examples of a bond opening type photoinitiator include acetophenone compounds such as diethoxyacetophenone, 2-hydroxy-2-methyl-1-phenylpropane-1-one, benzyldimethylketal, 1-(4-propylphenyl)-2-hydroxy-2-methylpropane-1-one, 4-(2-hydroxyethoxy)phenyl (2-hydroxy-2-propyl) ketone, 1-hydroxycyclohexyl phenyl ketone, 2-methyl-2-morpholino(4-thiomethylphenyl)propane-1-one, and 2-benzyl-2-dimethylamino-1-(4-morpholinophenyl)butanone; benzoines such as benzoin, benzoin methyl ether, and benzoin isopropyl ether; acylphospine oxides such as 2,4,6-trimethylbenzoyldiphenylphosphine oxides; benzil; and methylphenylglyoxy ester.

Examples of a hydrogen withdrawing type photoinitiator include benzophenones such as benzophenone, methyl o-benzoylbenzoate, 4-phenylbenzophenone, 4,4'-dichlorobenzophenone, hydroxybenzophenone, 4-benzoyl-4'-methyl-diphenylsulfide, acrylated benzophenone, 3,3',4,4'-tetra (t-butylperoxycarbonyl)benzophenone, and 3,3'-dimethyl-4-methoxybenzophenone; thioxanthones such as 2-isopropylthioxanthone, 2,4-dimethylthioxanthone, 2,4-diethylthioxanthone, and 2,4-dichlorothioxanthone; aminobenzophenones such as michler's ketone and 4,4'-diethylaminobenzophenone; 10-butyl-2-chloroacridone; 2-ethylanthraquinone; 9.10-phenanthrenequinone; and camphorquinone.

The photoinitiator content of the ink is preferably from 0.01 to 10.00% by weight. The ink used in the invention may contain a photo acid generator. As the photo acid generator, for example, compounds used in a chemical amplification type photo resist or in a light cation polymerizable composition are used (Organic electronics material seminar "Organic material for imaging" from Bunshin publishing house (1993), refer to page 187 - 192). Examples of photo acid generator (B-1) suitably used in the ink of the invention will be listed below.

### [Photo acid generator (B-1)]

Firstly, a B(C₆F₅)₄⁻, PF₆⁻, AsF₆⁻, SbF₆⁻, CF₃SO₃⁻ salt of an aromatic onium compound such as an aromatic diazonium, ammonium, iodonium, sulfonium, or phosphonium compound, can be listed.

Examples of the onium compound used in the invention will be shown below.

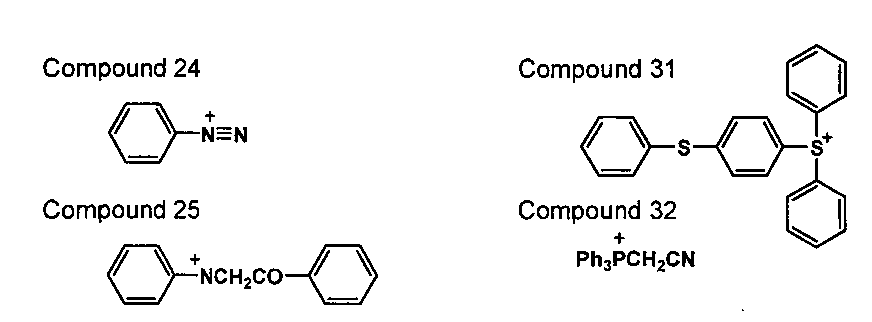

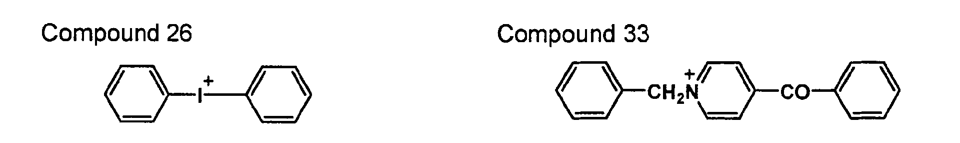

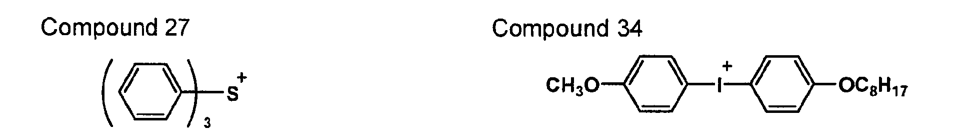

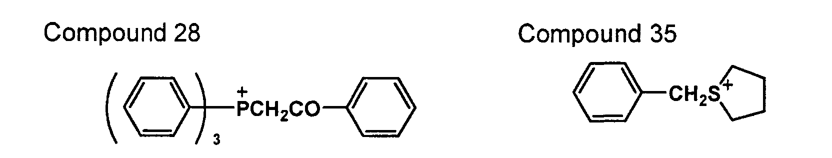

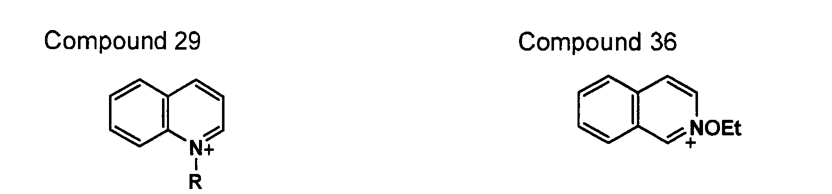

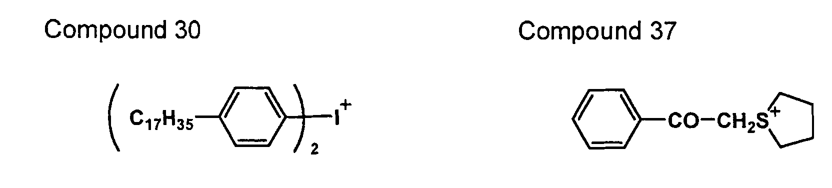

Secondly, sulfone compounds, which generate sulfonic acid, can be listed. Examples thereof will be shown below.

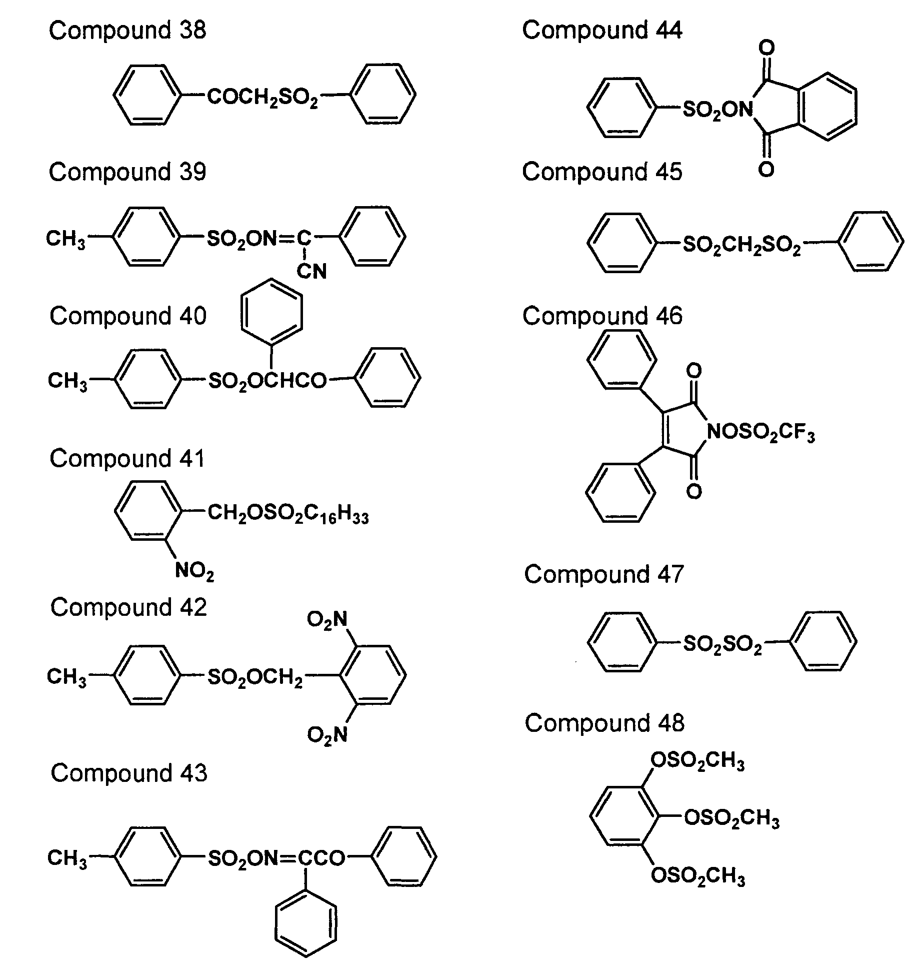

Thirdly, halide compounds, which generate hydrogen halide, can also be used. Examples thereof will be shown below.

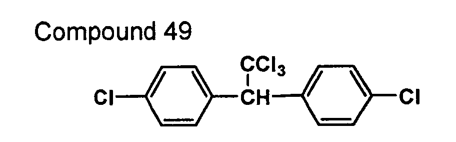

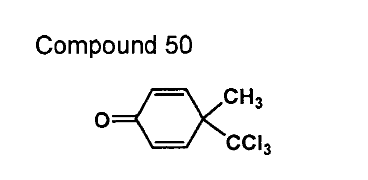

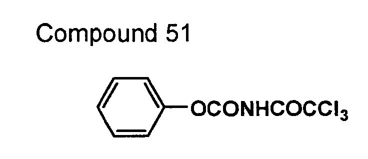

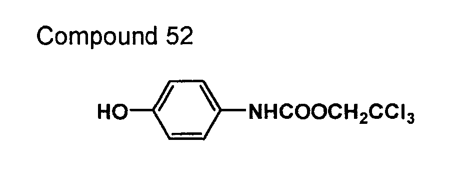

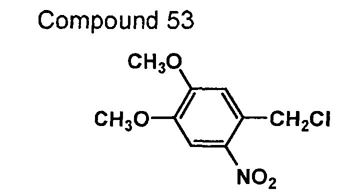

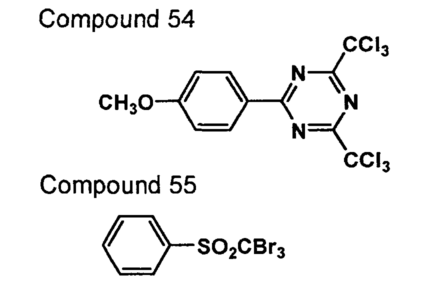

Fourthly, iron arene complexes, for example, those as described below, can be listed.

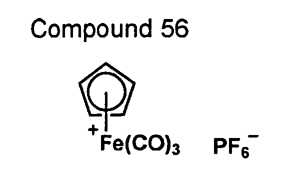

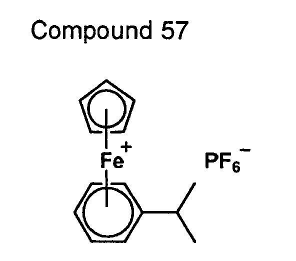

### [Colorant (C)]

Examples of colorant include organic pigment such as phthalocyanines, azo compounds, quinacridones, dioxazines, and diketopyrrolopyrroles, and inorganic pigment such as carbon black, titanium white, mica, and zinc oxide. The colorant content of the ink is preferably from more than 0 to 20% by weight.

The ink used in the invention is cured by UV irradiation. In order to carry out the curing reaction efficiently, a photosensitizer can be used, and photosensitizer (D) will be detailed below.

### [Photosensitizer (D)]

Examples of the photosensitizer include amines such as triethanolamine, metyldiethanolamine, triisopropanolamine, methyl 4-dimethylaminobenzoate, ethyl 4-dimethylaminobenzoate, isoamyl 4-dimethylaminobenzoate, 2-(dimethylamino)ethyl bonzoate, n-butoxyethyl 4-dimethylaminobonzoate, and 2-ethylhexyl 4-dimethylaminobonzoate; cyanine; phthalocyanine,; merocyanine; porphyrin; a spiro compound, ferrocene; fluorene; fulgide; imidazole; perylene; phenazine; phenothiazine; polyene; an azo compound, diphenylmethane; triphenylmethane; polymethine; acridine; cumarin; ketocumarien; quinacridone; indigo; styryl; a pyrylium compound; a pyrromethene compound; a pyrazolotriazole compound; a benzothiazole compound; a barbituric acid derivative; and a thiobarbituric acid derivative. Further, compounds are used which are disclosed in European Patent No. 568.993, US Patent Nos. 4,508,811 and 5,227,227, and Japanese Patent O.P.I. Publication Nos. 2001-125255 and 11-271969. The photosensitizer content of the ink is preferably from 0.01 to 10.00% by weight.

The ink in the invention may contain an agent such as a silane coupling agent, a polymerization inhibitor or a leveling agent in order to improve various performances, as long as original properties of the ink do not vary.

### (Agent (E) such as a silane coupling agent, a polymerization inhibitor or a leveling agent)

Examples of the silane coupling agent include γ-methacryloxypropyltrimethoxysilane, γ-(2-aminoethyl)-aminopropyltrimethoxysilane, and γ-mercaptopropyltrimethoxysilane. Examples of the polymerization inhibitor include methoquinoe, hydroquinone, methylhydroquinone, and benzoquinone. Examples of the leveling agent include Modaflow (Trade name, produced by Monsanto Co., Ltd.) and FLUORESCENT COMPOUND-430 (produced by 3M Vo., Ltd.). It is preferred that the ink contain the agent such as the silane coupling agent, polymerization inhibitor or leveling agent in an amount of from more than 0 to 20% by weight.

The ink of the invention can be obtained by mixing the components described above appropriately, and the mixing order or method is not specifically limited. The ink of the invention is a photocurable ink with a viscosity at 50 °C of preferably from 7 to 20 mPa·s, and more preferably from 7 to 12 mPa·s.

Further, the ink used in the invention optionally contains a solvent (a diluent). The solvent (F) which may be contained in the ink will be explained below.

### [Solvent (F) (diluent)]

Examples of the solvent include ketone such as methyl ethyl ketone or methyl isobutyl ketone; acetic acid ester such as ethyl acetate or butyl acetate; an aromatic hydrocarbon such as benzene, toluene or xylene; alcohol such as ethylene glycol monoacetate, or propylene glycol dimethyl ether; water; and other conventional organic solvents.

Recording medium 2 used in the invention will be explained below.

The recording medium used in the invention may be an ink absorbing recording medium or an ink non-absorbing recording medium. Herein, "ink non-absorbing recording medium" means a recording medium which does not absorb ink. However, in the invention, a recording medium, in which the ink transfer amount according to a Bristo method is less than 1 ml/mm², substantially 0 ml/mm², is defined as the ink non-absorbing recording medium and a recording medium, in which the ink transfer amount according to a Bristo method is not less than 1 ml/mm², is defined as the ink absorbing recording medium.

As the ink non-absorbing recording medium used in the invention, besides ordinary non-coated paper or coated paper, various non-absorptive resin film sheets, which are used in a so-called light packaging, can be utilized. Examples of the resin for the plastic film sheet include polyethylene terephthalate, polyester, polyolefin, polyamide, polyesteramide, polyether, polyimide, polyamideimide, polystyrene, polycarbonate, poly-s-phenylenesulfide, polyetherester, polyvinyl chloride, poly(meth)acrylate, polyethylene, polypropylene, nylon, a copolymer thereof, a blend thereof, a cross-linked polymer in which the above polymer is cross-linked.

The ink non-absorbing recording medium has a surface energy of preferably from 35 to 60 mN/m, and more preferably from 40 to 60 mN/m.

Examples of the ink absorbing recording medium include plain paper (normal paper) and wood-free paper.

Next, an image recording method employing an image recording apparatus, ink jet printer 1 will be explained.

In Fig. 1, when the ink jet printer 1 is switched on and the transporting system functions, the recording medium 2 supported on the platen 3 is transported to print from the rear of the page to the front of the page. Then, the carriage 5 laterally reciprocates above the recording medium 2, followed by ink ejecting from the recording head 6 and UV irradiation from the two ultraviolet irradiation systems 10 and 11.

During the reciprocating motion of the carriage 5, ink droplets having a volume of from 1 to 10 pl are ejected from the ink recording head 6 onto the recording medium 2 to form a dot image on the recording medium 2.

The ink ejecting section 8 of the recording head 6 is heated by means of the heater 9, and maintained at 40 to 80 °C, and the recording medium 2 is heated through the platen 3 by the heater 4 and maintained at a temperature equal to or lower than that of the ink ejecting section 8, the difference in temperature between the ink ejecting section 8 and the recording medium 2 being not more than 40 °C.

During the reciprocating motion of the carriage 5, ultraviolet light is emitted from the ultraviolet light sources 12 and 13 of the ultraviolet irradiation systems 10 and 11 toward the recording medium 2, and the ink ejected onto the recording medium 2 is subjected to ultraviolet light exposure. That is, when the carriage 5 moves from the left to the right, the ejected ink on the recording medium 2 is subjected to ultraviolet light exposure from the ultraviolet irradiation system 10, and when the carriage 5 moves from the right to the left, the ejected ink on the recording medium 2 is subjected to ultraviolet light exposure from the ultraviolet irradiation system 11. It is preferred that ultraviolet light is irradiated to each dot of the ink ejected onto the recording medium for 0.05 to 10 seconds. The ejected ink is instantly cured on the recording medium 2 by the ultraviolet light irradiation and fixed on the recording medium 2.

Thereafter, the ink jet printer 1 repeats the above steps, and intended images consisting of numerous dots are formed on the recording medium 2.

The ink of the invention can minimize lowering of ink sensitivity under high temperature and high humidity, since the ink contains, as an additive, a bifunctional oxetane compound or a monofunctional oxetane compound each with an oxetane ring having a substituent at the 2-position. That is the ink used in the invention does not lower its sensitivity under high temperature and high humidity, and the ink can be sufficiently cured employing ultraviolet light with approximately normal exposure intensity. Accordingly, the ink jet printer 1 employing such a photocurable ink for recording an image does not require an excessive exposure amount of ultraviolet light from the ultraviolet light irradiation systems 10 and 11, clogging due to ink of the recording head 6 can be avoided, and lowering of storage stability of a recording medium with a recorded image or image quality of the recorded image lowers, which results from insufficient ultraviolet light exposure, can be prevented.

The image recording apparatus or image recording method of the invention can record an image under reduced humidity, and prevent ink sensitivity lowering with certainty, since the ink ejecting section of the recording head 6 is maintained at 40 to 80 °C by means of the heater 9 and the recording medium 2 is maintained by the heater 4 at a temperature equal to or lower than that of the ink ejecting section of the recording head 6, so that the difference in temperature between the ink ejecting section 8 and the recording medium 2 is not more than 40 °C. Further, since in the ultraviolet light emitted from the ultraviolet light sources 12 and 13, the intensity of emission spectrum of 220 to 280 nm is not less than one third that of emission spectrum of 280 to 400 nm, the ultraviolet light irradiated to ink on the recording medium comprises more of higher energy ultraviolet light with a shorter wavelength, which can shorten ultraviolet light irradiation time, and can prevent clogging due to ink of the recording head with certainty. Further, when the photocurable ink ejected onto the recording medium is exposed to the ultraviolet light emitted from the ultraviolet light sources 12 and 13 for 0.05 to 10 seconds, the ink can be sufficiently cured on the recording medium, and therefore, lowering of storage stability of a recording medium with a recorded image or image quality of the recorded image can be prevented with certainty.

### [Examples]

In the examples, characters and images were printed on a recording medium employing the same inkjet printer as the ink jet printer 1 described above and the image recording method described above. Thus, characters and images were recorded on a recording medium under various conditions at high humidity (at 30 °C and 80% RH), employing eleven kinds of ink each having a different ink composition, and (1) quality of characters, (2) clogging due to ink of recording head, and (3) storage stability of recording medium with a recorded image (blocking) were evaluated. The ink composition of ink used, experimental conditions, and the results are shown in Table 1.

Ink used in inventive examples 1 through 8 contained the oxetane compound in the invention (the oxetane compound (G-1) or (G-2) described above), and comparative examples 1 through 3 contained no oxetane compounds. In the inventive examples 1 through 8 and comparative examples 1 through 3, a low pressure mercury lamp, (Trade name GL-200 produced by Nippo Denki Co., Ltd.), was applied as the ultraviolet light source, and in the comparative example 3, a high pressure lamp, (Trade name Vzero produced by INTEGRATION TECHNOLOGY Co., Ltd.), was applied as the ultraviolet light source. As the recording medium, a 75 µm thick PET (polyethylene terephthalate) sheet with an A4 size, i.e., a size of 210 mm x 297 mm was used.

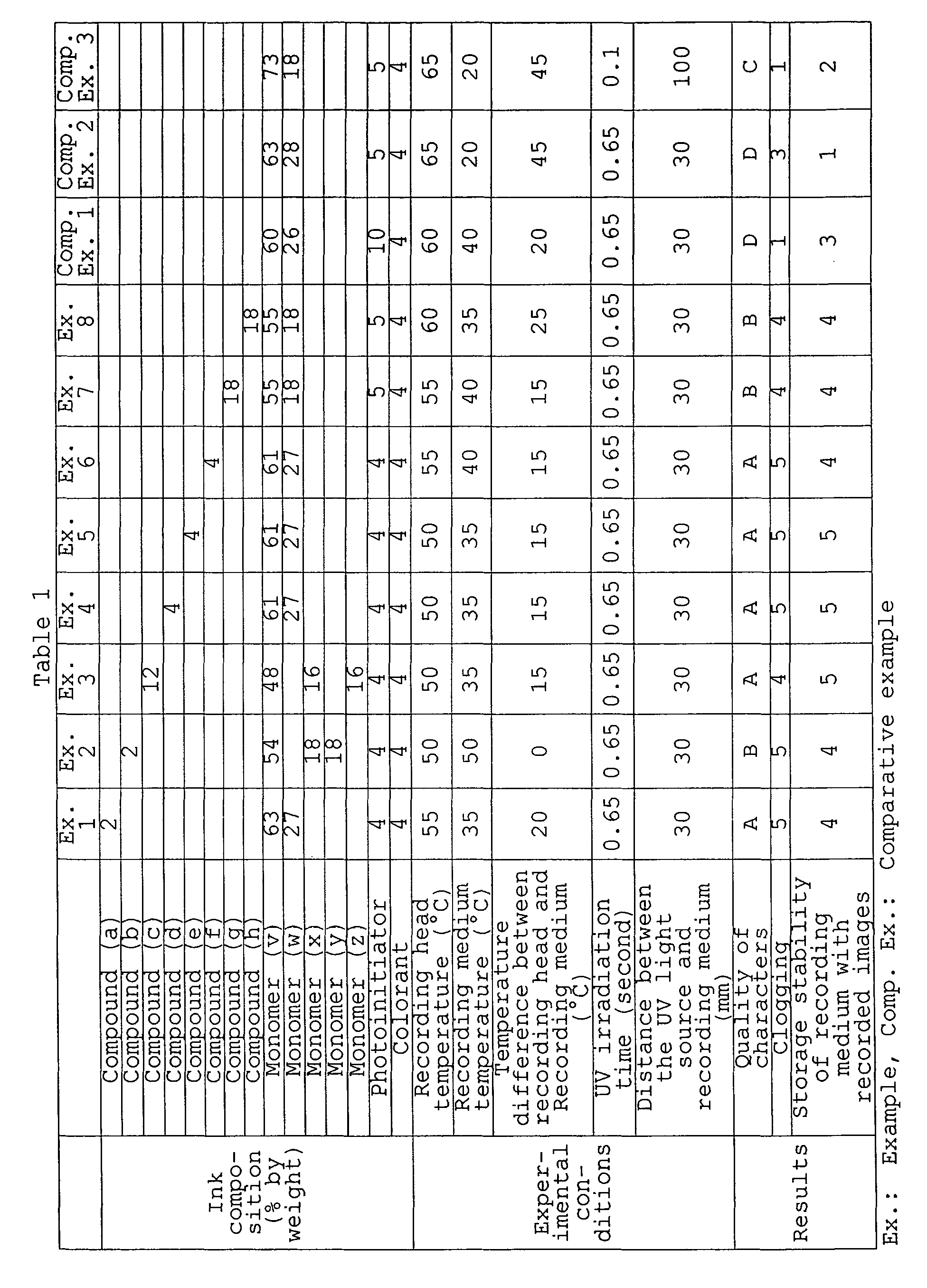

In Table 1, Compounds (a) through (h) will be explained below. Compounds (a) through (h) are oxetane compounds. Compound (a) is a bifunctional oxetane compound belonging to formula 60 above, Compound (b) is a bifunctional oxetane compound belonging to formula 61 above, Compound (c) is a bifunctional oxetane compound belonging to formula 62 above, Compounds (d) and (e) are bifunctional oxetane compounds belonging to formula 63 above, Compound (f) is a bifunctional oxetane compound belonging to formula 64 above, Compound (g) is a bifunctional oxetane compound, and Compound (h) is a monofunctional oxetane compound.

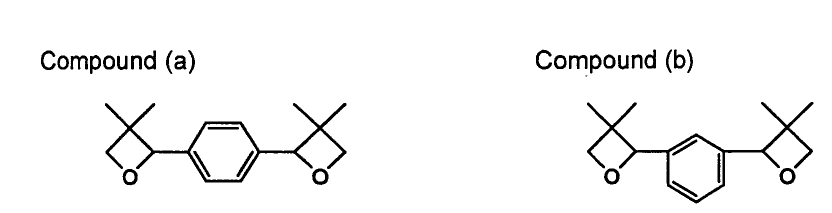

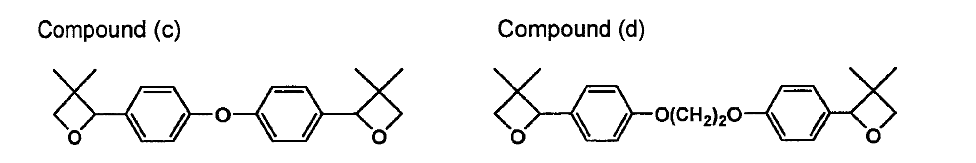

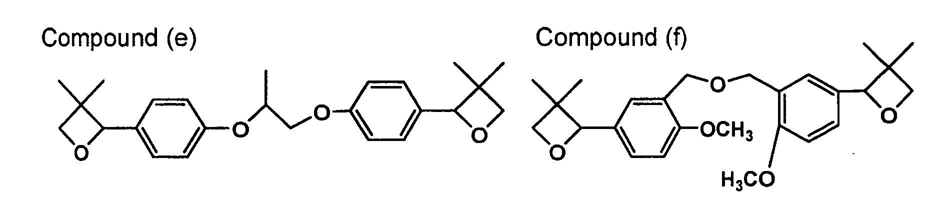

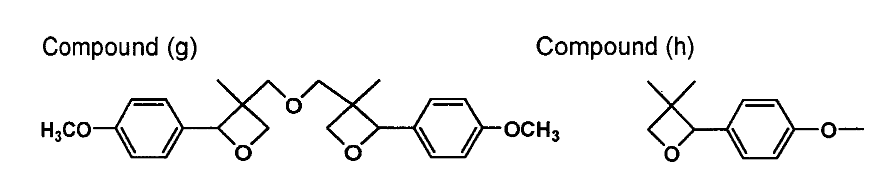

In Table 1, monomers (v) through (z) are cation polymerizable compounds, which will be explained below. Monomer (v) is an oxetane compound (Trade name OXT 221 produced by TOA GOSEI Co., Ltd.), which is other than the oxetane compound in the invention, Monomer (w) is an epoxy compound (Trade name Cel 2021P produced by DAICEL KAGAKU KOGYO Co., Ltd.), Monomer (x) is an epoxy compound (Trade name Cel 3000P produced by DAICEL KAGAKU KOGYO Co., Ltd.), Monomer (y) is an epoxy compound (Trade name E-4030 produced by SHINIPPON RIKA Co., Ltd.), and Monomer (z) is a vinyl ether compound (Trade name DVE-3 produced by KURARAY Co., Ltd.) .

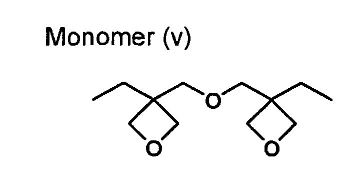

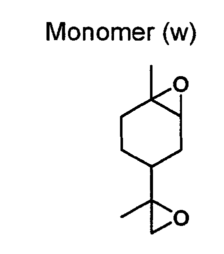

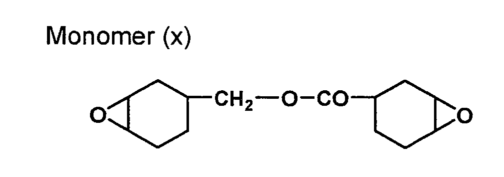

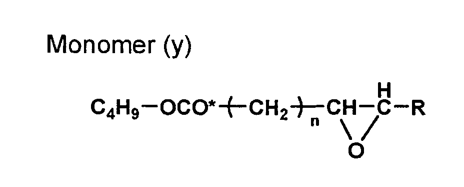

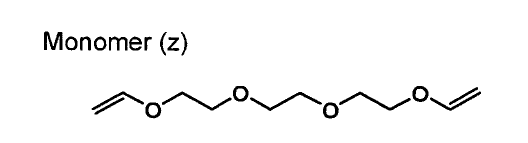

In Table 1, "photoinitiator" is a triarylsulfonium salt (Trade name UVI-6992 produced by DOW CHEMICAL Co., Ltd.), and Colorant used is pigment (Yellow: CI pigment Yellow-13; Magenta: CI pigment Red-57:1; Cyan: CI pigment Blue-15:3; and Black: CI pigment Black-7).

### [Experimental conditions]

In Table 1, "Recording head temperature (°C)" represents temperature at the ink ejecting section of the recording head, "Recording medium temperature (°C)" represents temperature of the recording surface of the recording medium, "Temperature difference (°C)" represents a temperature difference (°C) between the ink ejecting section of the recording head and the recording surface of the recording medium, "UV irradiation time (second)" represents time during which ink ejected onto the recording medium is exposed to ultraviolet light, and "Irradiation distance (mm)" represents a distance from the UV light source to the recording medium surface.

### [Results]

In Table 1, (1) quality of characters, (2) clogging, and (3) storage stability of a recording medium with recorded images were evaluated according to the following method:

### [(1) Quality of characters]

6-point MS Minchyo (Ming-style) font characters were recorded employing inks containing the Yellow, Magenta, Cyan or Black pigment, and the resulting characters were evaluated for smoothness through a magnifying glass according to the following criteria. Herein, MS (Micro Soft™ Minchyo (Ming-style) font is one of the Japanese fonts for printing.
A: No roughness was observed.
B: Slight roughness was observed.
C: Roughness was observed, however, the resulting characters were legible.
D: Significant roughness was observed, and the resulting characters were scratchy.

### [(2) Clogging]

An image was recorded on a recording medium with a total area of about 1000 m², employing a recording head. Thereafter, clogging due to ink of 512 nozzles provided in the recording head was visually observed, and evaluated according to the following criteria:
5: No clogging was observed in all the nozzles.
4: Clogging was observed in less than 1% of the nozzles.
3: Clogging was observed in 1 to less than 2% of the nozzles.
2: Clogging was observed in 2 to less than 5% of the nozzles.
1: Clogging was observed in not less than 5% of the nozzles.

In the above criteria, ranks 5 through 3 are levels capable of being put into practical use, but ranks 2 and 1 are levels incapable of being put into practical use.

### [(3) Storage stability of recording medium with recorded images]

An ink image was recorded on each of 100 recording mediums under high humidity condition (at 30 °C and 80% RH), and the resulting recording mediums were superimposed and stored under the same condition as above (at 30 °C and 80% RH). Then, storage stability of the recording medium with the ink image (storage stability of the ink images) was evaluated according to the following criteria:
5: No tackiness was observed in each of recording media, and there was no ink transfer from one recording medium to another.
4: Slight tackiness was observed in each of recording media, but there was no ink transfer from one recording medium to another.
3: A little tackiness was observed in each of recording media, and there was slight ink transfer from one recording medium to another.
2: Tackiness was observed in each of recording media, and there was ink transfer from one recording medium to another. 1: Much tackiness was observed in each of recording media, and there was much ink transfer from one recording medium to another, the recording medium is difficult to separate from another.

In the above criteria, ranks 5 through 3 are levels capable of being put into practical use, but ranks 2 and 1 are levels incapable of being put into practical use.

As is apparent from Table 1, there is a great difference in quality of characters, clogging due to ink of recording head, and storage stability of recording medium with recorded image between Examples 1 through 8 and Comparative Examples 1 through 3. That is, ink containing Compound (a), (b), (c), (d), (e), (f), (g) or (h) provides best or good results in any of quality of characters, clogging due to ink of recording head, and storage stability of recording medium with recorded image. However, ink, which does not contain Compound (a), (b), (c), (d), (e), (f), (g) nor (h), does not provide the results described above. The above result proves that the ink, containing the monofunctional or bifunctional oxetane compound with an oxetane ring having a substituent at the 2-position, greatly improves quality of characters recorded and storage stability of a recording medium with recorded images, and prevents clogging due to ink of a recording head.

Among examples 1 through 8, examples 4 and 5, which employ Compounds (d) and (e), respectively, provide the best results in all of character quality, clogging, and recording medium storage stability. Compounds (d) and (e) belong to formula (63) . As is apparent from the above, among the monofunctional or bifunctional oxetane compound each with an oxetane ring having a substituent at the 2-position, particularly the bifunctional oxetane compound belonging to formula (63) above can provide the most superior character quality and recording medium storage stability, and can prevent clogging due to ink of a recording head.

### [EFFECTS OF THE INVENTION]

The photocurable ink according to the invention can prevent ink sensitivity lowering under high humidity condition. That is, the photocurable ink of the invention can be sufficiently cured under high humidity condition by irradiation of ultraviolet light with an approximately normal intensity, since the ink sensitivity does not lower. Therefore, when this ink is used as ink for image recording, clogging due ink of an ink recording head is avoided, since an excessive intensity of ultraviolet light is not required. Further, there does not occur the phenomenon that storage stability of a recording medium with a recorded image, or image quality of the recorded image lowers on account of insufficient ultraviolet light exposure.

## Claims

1. An image recording method employing a photocurable ink containing an oxetane compound with an oxetane ring having a substituent at the 2-position, the method comprising the steps of:
(a) ejecting the photocurable ink as ink droplets from an ink ejecting section of a recording head onto a recording medium; and
(b) exposing, to ultraviolet light, the photocurable ink ejected onto the recording medium, wherein the ink ejecting section is heated to a temperature of 40 to 80 °C and the recording medium is heated to a temperature equal to or lower than that of the ink ejecting section, so that the difference in temperature between the ink ejecting section and the recording medium is not more than 40 °C.

2. The image recording method of claim 1, wherein the ultraviolet light comprises a first emission spectrum of from 220 to 280 nm, and a second emission spectrum of from more than 280 to 400 nm, and wherein intensity of the first emission spectrum is not less than one third of that of the second emission spectrum.

3. The image recording method of claim 1, wherein the photocurable ink ejected onto the recording medium is exposed to the ultraviolet light for 0.05 to 10 seconds.

4. The image recording method of claim 1, wherein each of the ink droplets of the photocurable ink to be ejected from the ink ejecting section of the recording head onto the recording medium has a volume of 1 to 10 pl.

5. An image recording apparatus employing a photocurable ink containing an oxetane compound with an oxetane ring having a substituent at the 2-position, the image recording apparatus comprising a recording head having an ink ejecting section for ejecting a photocurable ink as ink droplets onto a recording medium, a recording head heater for heating the ink ejecting section of the recording head, a recording medium heater for heating the recording medium, and an ultraviolet light source for emitting ultraviolet light to which the ink to have been ejected onto the recording medium is exposed, wherein while the recording head is operated to eject the ink onto the recording medium to record an image on the recording medium, the ink ejecting section is heated by the recording head heater to a temperature of 40 to 80 °C and the recording medium is heated by the recording medium heater to a temperature equal to or lower than that of the ink ejecting section, so that the difference in temperature between the ink ejecting section and the recording medium is not more than 40 °C.

6. The image recording apparatus of claim 5, wherein the ultraviolet light comprises a first emission spectrum of from 220 to 280 nm and a second emission spectrum of from more than 280 to 400 nm, and wherein intensity of the first emission spectrum is not less than one third of that of the second emission spectrum.

7. The image recording apparatus of claim 5, wherein the photocurable ink ejected onto the recording medium is exposed to the ultraviolet light for 0.05 to 10 seconds.

8. The image recording apparatus of claim 5, wherein each of the ink droplets of the photocurable ink to be ejected from the ink ejecting section of the recording head onto the recording medium has a volume of 1 to 10 pl.

9. A photocurable ink of a cationic polymerization type, wherein the ink contains an oxetane compound with an oxetane ring having a substituent at the 2-position, a photoinitiator and a colorant.

10. The photocurable ink of claim 9, wherein the oxetane compound is a bifunctional oxetane compound.
